(19) Europäisches Patentamt
European Patent Office
Office européen des brevets

(11) **EP 2 012 301 A1**

(12) **EUROPEAN PATENT APPLICATION**
published in accordance with Art. 153(4) EPC

(43) Date of publication:
**07.01.2009 Bulletin 2009/02**

(51) Int Cl.:
*G09G 5/34* (2006.01)    *G06T 3/00* (2006.01)
*G09G 5/00* (2006.01)    *G09G 5/377* (2006.01)
*H04N 5/265* (2006.01)

(21) Application number: **06732313.9**

(22) Date of filing: **25.04.2006**

(86) International application number:
**PCT/JP2006/308653**

(87) International publication number:
**WO 2007/129367 (15.11.2007 Gazette 2007/46)**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Mitsubishi Electric Corporation
Chiyoda-ku
Tokyo 100-8310 (JP)**

(72) Inventors:
• **TSUBAKI, Yasunori
Tokyo 100-8310 (JP)**
• **TANAKA, Atsushi
Tokyo 100-8310 (JP)**
• **HAGIWARA, Toshiyuki
Tokyo 100-8310 (JP)**
• **NAITOU, Manami
Tokyo 100-8310 (JP)**

(74) Representative: **Pfenning, Meinig & Partner GbR
Patent- und Rechtsanwälte
Theresienhöhe 13
80339 München (DE)**

(54) **IMAGE COMBINING APPARATUS AND IMAGE COMBINING METHOD**

(57) A transition information calculating section 2 calculates the number of pixels moved by the transition effect of an image; an image generating section 3a reads out drawing source regions of image files 1a and 1b, which are calculated from the rounded down number of pixels moved, and writes into drawing target regions of an image generating buffer 12a, which are calculated from the rounded down number of pixels moved; an image generating section 3b reads out drawing source regions of image files 1a and 1b, which are calculated from the rounded up number of pixels moved, and writes into drawing target regions of an image generating buffer 12b, which are calculated from the rounded up number of pixels moved; and an image interpolating compositing section 4 combines the individual image data in the image generating buffers 12a and 12b according to a composite ratio calculated from the number of pixels moved, and writes them into an interpolating compositing buffer 13.

FIG. 1

**Description**

TECHNICAL FIELD

The present invention relates to an image compositing apparatus that performs effective display by moving images.

BACKGROUND ART

Recently, as the display apparatuses have been slimmed down and the display apparatuses and computers have reduced their cost and improved their performance, it has become common to see on the streets a scene that displays multimedia contents such as an eye-catcher or advertising copy, image or video on various types of display apparatuses at facilities or outdoors a lot of people meet.

One of the advantages of the content display using a computer is that the contents can be exchanged very easily. In addition, it can alter the display time of the contents freely by only changing settings, and set a changing method of the contents freely by a program. In addition, it has an advantage of being able to readily expand the range of an exhibiting method of the contents.

An example of the display system is a system that exhibits advertising copy on a display apparatus used as a store sign. The system makes images more effective by switching a lot of still images sequentially, by scrolling images with a resolution higher than that of the display apparatus, or by converting a long advertising copy into an image and displaying it while moving it, thereby being able to exhibit a greater number of images on the display apparatus with a limited area, and to attract public attention better.

As a conventional image compositing apparatus, there is one that includes an image memory for storing pixel values constituting a plurality of images; a key plane for storing composite ratios between the pixel values; an image compositing means for combining the pixel values in accordance with the composite ratios and outputting the composite values between the pixel values; a display control means for generating a display start address for reading the pixel values and composite ratios from the image memory and the key plane to the image compositing means; a scroll register for retaining an address value different from the display start address; and an address switching means for switching between the display start address and the address retained in the scroll register, and that changes the boundary between the two images during scroll processing to any desired shape (see Patent Document 1, for example)

Patent Document 1: Japanese Patent Laid-Open No. 5-313645/1993.

With the foregoing configuration, the conventional image compositing apparatus, which can move an image with only accuracy of an integer pixel unit in the display apparatus during one period of the vertical synchronizing signal whenmoving the image, has a problem of making it difficult to operate in a desired transition time because it moves the image with the accuracy of an integer pixel unit at every one period of the vertical synchronizing signal and hence a settable transition time is limited to the time capable of completing the transition effect.

The present invention is implemented to solve the foregoing problem. Therefore it is an object of the present invention to provide an image compositing apparatus capable of setting the transition time more flexibly by controlling image movement with an accuracy of a decimal pixel (called "subpixel" from now on) unit at every one period of the vertical synchronizing signal to handle the movement with the accuracy of the decimal pixel (subpixel) unit of the image.

DISCLOSURE OF THE INVENTION

The image compositing apparatus in accordance with the present invention includes: a transition information calculating section for calculating the number of pixels moved as transition information on a transition image; and an image compositing section for outputting composite data by combining image data in the transition image, which corresponds to the rounded down number of pixels moved obtained by rounding down the number of pixels moved calculated by the transition information calculating section to the nearest whole number, with the image data in the transition image, which corresponds to the rounded up number of pixels moved obtained by rounding up the number of pixels moved to the nearest whole number, at a composite ratio based on the number of pixels moved.

According to the present invention, it becomes possible to control the image movement with an accuracy of the decimal pixel (subpixel) unit, thereby offering an advantage of being able to eliminate the restriction on setting the transition time.

BRIEF DESCRIPTION OF THE DRAWINGS

FIG. 1 is a block diagram showing a configuration of the image compositing apparatus of an embodiment 1 in accordance with the present invention;

FIG. 2 is a diagram illustrating a general outline of the scroll effect of image data in the image compositing apparatus of the embodiment 1 in accordance with the present invention;

FIG. 3 is a flowchart showing a processing procedure of the image compositing apparatus of the embodiment 1 in accordance with the present invention;

FIG. 4 is a block diagram showing a configuration of the image compositing apparatus of an embodiment 2 in accordance with the present invention;

FIG. 5 is a diagram illustrating a general outline of the scroll effect of image data in the image compositing apparatus of the embodiment 2 in accordance with the present invention;

FIG. 6 is a diagram illustrating changes in the screen due to the scroll effect of the image data in the image compositing apparatus of the embodiment 2 in accordance with the present invention;

FIG. 7 is a flowchart showing a processing procedure of the image compositing apparatus of the embodiment 2 in accordance with the present invention;

FIG. 8 is a diagram explaining the processing of an image generating section of the image compositing apparatus of the embodiment 2 in accordance with the present invention;

FIG. 9 is a diagram showing changing behavior of the image data in various sections of the image compositing apparatus of the embodiment 2 in accordance with the present invention;

FIG. 10 is a diagram showing changing behavior of luminance values of image data in various sections of the image compositing apparatus of the embodiment 2 in accordance with the present invention;

FIG. 11 is a block diagram showing a configuration of the image compositing apparatus of an embodiment 3 in accordance with the present invention;

FIG. 12 is a block diagram showing a configuration of the image compositing apparatus with an output selecting section of the embodiment 3 in accordance with the present invention;

FIG. 13 is a flowchart showing a processing procedure of the image compositing apparatus of the embodiment 3 in accordance with the present invention;

FIG. 14 is a diagram showing changing behavior of image data in various sections of the image compositing apparatus of the embodiment 3 in accordance with the present invention;

FIG. 15 is a diagram showing changing behavior of luminance values of the image data in the various sections of the image compositing apparatus of the embodiment 3 in accordance with the present invention;

FIG. 16 is a block diagram showing a configuration of the image compositing apparatus of an embodiment 4 in accordance with the present invention;

FIG. 17 is a flowchart showing a processing procedure of the image compositing apparatus of the embodiment 4 in accordance with the present invention;

FIG. 18 is a block diagram showing a configuration of the image compositing apparatus of an embodiment 5 in accordance with the present invention;

FIG. 19 is a flowchart showing a processing procedure of the image compositing apparatus of the embodiment 5 in accordance with the present invention;

FIG. 20 is a block diagram showing a configuration of the image compositing apparatus of an embodiment 6 in accordance with the present invention;

FIG. 21 is a flowchart showing a processing procedure of the image compositing apparatus of the embodiment 6 in accordance with the present invention;

FIG. 22 is a block diagram showing a configuration of the image compositing apparatus of an embodiment 7 in accordance with the present invention;

FIG. 23 is a flowchart showing a processing procedure of the image compositing apparatus of the embodiment 7 in accordance with the present invention;

FIG. 24 is a diagram illustrating changes in the screen due to the slide-in effect of image data in the image compositing apparatus of the embodiments in accordance with the present invention;

FIG. 25 is a diagram illustrating changes in the screen due to the slide-out effect of image data in the image compositing apparatus of the embodiments in accordance with the present invention;

FIG. 26 is a diagram illustrating changes in the screen due to the wiping effect of image data in the image compositing apparatus of the embodiments in accordance with the present invention;

FIG. 27 is a diagram illustrating changes in the screen due to a variation (1) of the wiping effect of the image data in the image compositing apparatus of the embodiments in accordance with the present invention; and

FIG. 28 is a diagram illustrating changes in the screen due to a variation (2) of the wiping effect of the image data in the image compositing apparatus of the embodiments in accordance with the present invention.

BEST MODE FOR CARRYING OUT THE INVENTION

The best mode for carrying out the invention will now be described with reference to the accompanying drawings to explain the present invention in more detail.

EMBODIMENT 1

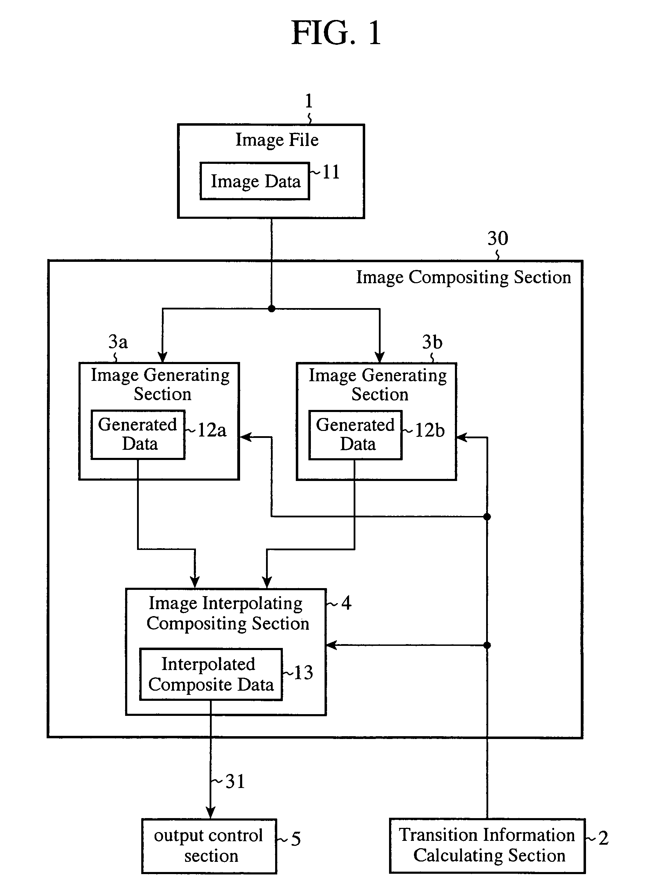

FIG. 1 is a block diagram showing a configuration of the image compositing apparatus of an embodiment 1 in accordance with the present invention. The image compositing apparatus, whichmakes a transitionof a single image according to a designated transition effect, comprises a transition information calculating section 2 and an image compositing section 30. The image compositing section 30 has image generating sections 3a and 3b, an image interpolating compositing section 4 and an output control section 5, and consists of the image generating sections 3a and 3b and image interpolating compositing section 4.

In the embodiment 1 in accordance with the present invention, it is assumed that the transition information provided from the transition information calculating section 2 to the image generating sections 3a and 3b and the image interpolating compositing section 4 is the number of pixels moved mv of an image. Here, the term "the number of pixels moved" refers to the number of pixels moved by the amount of which the image moved by the transition effect shifts from the starting position of the transition. In addition, if it is synchronized with the vertical synchronizing signal, the drawing timing is assumed to occur every 16.66··· milliseconds when the refresh rate is 60 Hz.

Next, the operation of the image compositing apparatus will be described.
In FIG. 1, an image file 1, which is provided for retaining image data, includes image data 11 to be subj ected to a transition, and supplies the image data 11 to the image generating sections 3a and 3b as their inputs. For example, when the image file 1 can have a buffer, it can extract the image data 11 required, and store it in the buffer to be output. When the image compositing section 30 can have a buffer, the image file 1 can extract the image data 11 and store it in the buffer in advance. In contrast, unless the image compositing section 30 can have a buffer, the image file 1 can output the image data 11 successively to the image compositing section 30.
The transition information calculating section 2 calculates the number of pixels moved mv of the image.

The image generating section 3a acquires as its input a first drawing source region portion of the image data 11 in the image file 1, which is calculated from the rounded down number of pixels moved reduced to the nearest whole number of the number of pixels moved obtained from the transition information calculating section 2; and outputs as a first drawing target region portion of generated data 12a calculated from the rounded down number of pixels moved just as the first drawing source region. Likewise, the image generating section 3a acquires as its input a second drawing source region portion of the image data 11 in the image file 1, which is calculated from the rounded down number of pixels moved reduced to the nearest whole number of the number of pixels moved; and outputs as a second drawing target region portion of the generated data 12a calculated from the rounded down number of pixels moved just as the second drawing source region. As for the generated data 12a, it is assumed that when the image generating section 3a can include the buffer, it is output after being generated and stored after the image data 11 is read, or that unless it can include the buffer, it is output while being read and generated successively.

The image generating section 3b acquires as its input a first drawing source region portion of the image data 11 in the image file 1, which is calculated from the rounded up number of pixels moved rounded up to the nearest whole number of the number of pixels moved obtained from the transition information calculating section 2; and outputs as a first drawing target region portion of generated data 12b calculated from the rounded up number of pixels moved just as the first drawing source region. Likewise, the image generating section 3b acquires as its input a second drawing source region portion of the image data 11 in the image file 1, which is calculated from the rounded up number of pixels moved rounded up to the nearest whole number of the number of pixels moved; and outputs as a second drawing target region portion of the generated data 12b calculated from the rounded up number of pixels moved just as the second drawing source region. As for the generated data 12b, it is assumed that when the image generating section 3b can include the buffer, it is output after being generated and stored after the image data 11 is read, or that unless it can include the buffer, it is output while being read and generated successively.

The image interpolating compositing section 4 generates interpolated composite data 13 by combining the generated data 12a and 12b of the image generating sections 3a and 3b according to a composite ratio f which is calculated from the number of pixels moved mv of the image obtained from the transition information calculating section 2 and which will be described later. As for the interpolated composite data 13, it is assumed that when the image generating section 4 can include a buffer, it is output after the generated data 12a and 12b are read and after it is synthesized and stored, or that unless it can include the buffer, it is output while being read and synthesized successively. The interpolated composite data 13 becomes composite data 31, the output of the image compositing section 30, as shown in the block diagram of FIG. 1.

Receiving the composite data 31 synthesized, the output control section 5 outputs it to an external display apparatus (not shown) at every drawing timing to be displayed.

The transition information calculating section 2 updates the number of pixels moved, which is the transition information, and the image compositing apparatus repeats the forgoing operation.

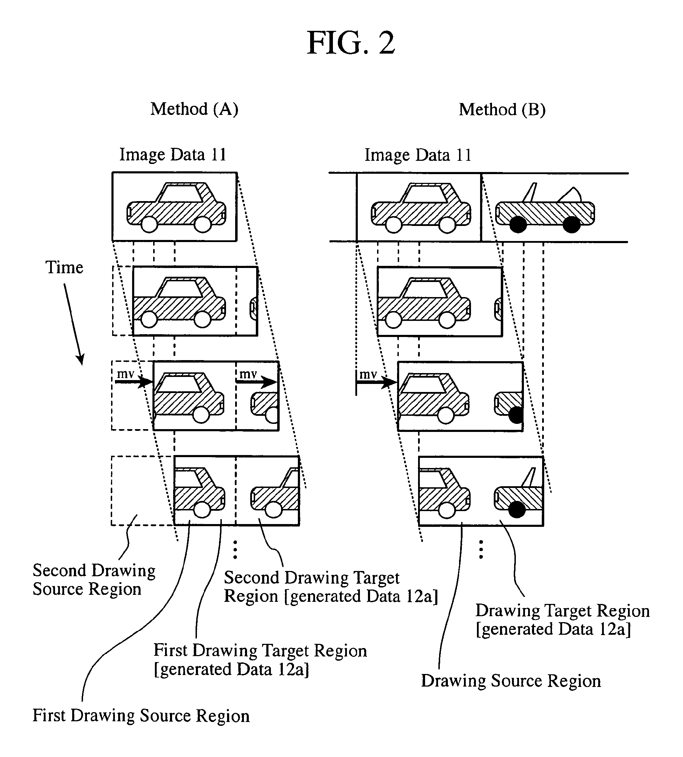

Here, FIG. 2 shows an outline of the transition effect of scrolling from right to left as a method (A) and a method (B), for example. As for the method (A), the generated data 12a has the same size as the image data 11, and a left side rectangular region cut out of the image data 11 is pasted as a right side rectangular region of the generated data 12a. As for the method (B), the input image data 11 is sufficiently greater than an effective composite region in the horizontal direction, and while being defined appropriately, a drawing source region is cut out and pasted to a drawing target region. Although the method is a typical scroll realizing method in accordance with the difference between the image data 11 and the generated data 12a in size, it is also possible for the method (B), when the image reaches the right side edge, to cut out the left side region and paste it in combination with the method (A). When employing the method (B), since the drawing source region of a piece of the image data 11 and the drawing target region of the generated data 12a are each divided into two parts and generated through two steps, the description of a flowchart differs in part as will be described later.

Thus, the image generating sections 3a and 3b receive as their inputs the drawing source region portions of the plurality of images data of the previous stage, and obtain corresponding drawing target region portions, thereby arranging and outputting the single generated data 12a and 12b accessible by a subsequent stage.

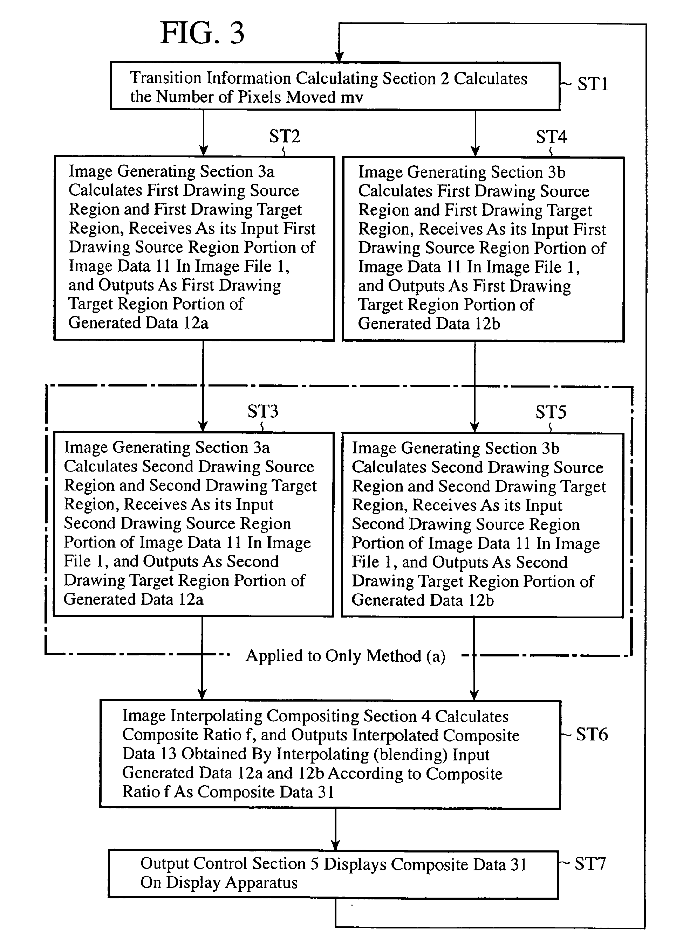

FIG. 3 is a flowchart showing a processing procedure of the image compositing apparatus of the embodiment 1 in accordance with the present invention. Referring to FIG. 3, the processing procedure of the image compositing apparatus will be described.

At step ST1, the transition information calculating section 2 calculates the number of pixels moved mv of the image from before the initial transition. For example, when the movement is carried out at a fixed speed, the number of pixels moved mv is obtained by adding LV/T to the number of pixels moved at the previous drawing, where L is the total number of pixels moved of the image, T is the transition time, and V is the update time interval of the display image of the display apparatus. Here, information about the number of pixels moved mv calculated is sent to the image generating sections 3a and 3b together with region computing formula information for obtaining the drawing source region and the drawing target region for each image according to a predetermined transition effect, and to the image interpolating compositing section 4 to calculate the composite ratio.

At step ST2, in both method (A) and method (B) of FIG. 2, the image generating section 3a calculates according to the following expression (1) the rounded down number of pixels moved mv_a in the image generating section 3a from the number of pixels moved mv provided by the transition information calculating section 2 and from the region computing formula information for obtaining the first drawing source region and first drawing target region for each image data.

$$mv\_a = floor(mv) \qquad (1)$$

where "floor (mv)" denotes a numerical function for rounding down the number of pixels moved mv to the nearest whole number.

Next, the image generating section 3a obtains the first drawing source region corresponding to the image data 11 in the image file 1 and the first drawing target region corresponding to the generated data 12a when the rounded down number of pixels moved calculated is mv_a, receives the first drawing source region portion of the image data 11 as the input, and outputs to the first drawing target region portion of the generated data 12a.

Step ST3 is executed only in the case of the method (A) described above. At step ST3, as at step ST2, the image generating section 3a obtains the second drawing source region corresponding to the image data 11 in the image file 1 and the second drawing target region corresponding to the generated data 12a when the rounded down number of pixels moved calculated is mv_a, receives the second drawing source region portion of the image data 11 as the input, and outputs to the second drawing target region portion of the generated data 12a. The second drawing source region corresponds to the left side rectangular region cut out of the image data 11 at step ST2, and the second drawing target region corresponds to the right side rectangular region of the generated data 12a.

At step ST4, in both method (A) and method (B) of FIG. 2, the image generating section 3b calculates according to the following expression (2) the rounded up number of pixels moved mv_b in the image generating section 3b from the number of pixels moved mv provided by the transition information calculating section 2 and from the region computing formula information for obtaining the first drawing source region and first drawing target region for each image data.

$$mv\_b = ceil(mv) \qquad (2)$$

where "ceil(mv)" denotes a numerical function for rounding up the number of pixels moved mv to the nearest whole number.

Next, the image generating section 3b obtains the first drawing source region corresponding to the image data 11 in the image file 1 and the first drawing target region corresponding to the generated data 12b when the rounded up number of pixels moved calculated is mv_b, receives the first drawing source region portion of the image data 11 as the input, and outputs to the first drawing target region portion of the generated data 12b.

Step ST5 is executed only in the case of the method (A) described above. At step ST5, as at step ST4, the image generating section 3b obtains the second drawing source region corresponding to the image data 11 in the image file 1 and the second drawing target region corresponding to the generated data 12b when the rounded up number of pixels moved calculated is mv_b, receives the second drawing source region portion of the image data 11 as the input, and outputs to the second drawing target region portion of the generated data 12b. The second drawing source region corresponds to the left side rectangular region cut out of the image data 11 at step ST4, and the second drawing target region corresponds to the right side rectangular region of the generated data 12b.

As for step ST2 to step ST5 described above, their order of executing the processing can be exchanged as long as the drawing source region and the drawing target region correspond correctly.

At step ST6, the image interpolating compositing section 4 calculates the composite ratio f according to the following expression (3) using the number of pixels moved mv obtained from the transition information calculating section 2.

$$f = mv - floor(mv) \qquad (3)$$

Next, using the composite ratio f calculated, the image interpolating compositing section 4 receives and blends the generated data 12a and generated data 12b according to the following expression (4), and outputs the interpolated composite data 13.

$$I'(x, y) = (1 - f) \cdot I_a(x, y) + f \cdot I_b(x, y) \qquad (4)$$

where I' (x, y) is the luminance value of a point (x, y) in the interpolated composite data 13, $I_a$ (x, y) is the luminance value at the point (x, y) in the generated data 12a, and $I_b$ (x, y) is the luminance value at the point (x, y) in the generated data 12b.

In addition, in the foregoing expression (4), $I_a$ (x, y) of the generated data 12a and $I_b$ (x, y) of the generated data 12b are a reference expression under the assumption that they are stored in the internal buffers, a reference expression at the time when there are no internal buffers can be given by the following expression (5).

$$I'(x, y) = (1 - f) \cdot I(x + floor(mv), y)$$
$$+ f \cdot I(x + ceil(mv), y) \qquad (5)$$

where I(x, y) denotes the luminance value at the point (x, y) in the image data 11. However, in the case of concatenating the left side of the image to the right edge of the image as shown in FIG. 2, the x coordinates of the foregoing expression (5), x + floor(mv) and x + ceil(mv), are assumed to be a remainder for the image width.

In the embodiment 1 in accordance with the present invention, the interpolated composite data 13 becomes the composite data 31 which is the output of the image compositing section 30 as shown in the block diagram of FIG. 1.

Finally, at step ST7, the output control section 5 causes the display apparatus to display on its screen the generated composite data 31 in synchronization with the drawing timing.

After that, returning to the initial step ST1, the transition information calculating section 2 updates the number of pixels moved mv corresponding to the transition information, and repeats the processing up to step ST6 until the number of pixels moved reaches mv = L.

As described above, according to the embodiment 1 in accordance with the present invention, in the image compositing apparatus which has a restriction on setting the image transition time because it can move images only with an accuracy of integer pixel unit at every vertical synchronizing signal physically, it creates, when performing the decimal pixel (subpixel) movement corresponding to the numerical value expressing not only the whole number part but also the fractional part, the image data moved by the amount of the nearest whole number to which the number of pixels to be moved is rounded down and the image data moved by the amount of the nearest whole number to which it is rounded up; and combines them using the composite ratio f equal to the fractional part; thereby being able to control the image movement with an accuracy of the decimal pixel (subpixel) unit and to offer an advantage of being able to eliminate the restriction on setting the transition time.

Incidentally, although the embodiment 1 in accordance with the present invention is described in a way that it refers to the image data 11 in the image file 1 directly at every drawing, it can offer the same advantage by storing the image data 11 temporarily in the image buffer before starting the transition and by reading the image data from the image buffer at the time of drawing. Likewise, as for the generated data 12a and 12b of the image generating sections 3a and 3b and the interpolated composite data 13 of the image interpolating compositing section 4, a configuration is also possible which stores them in buffers provided respectively, and reads them out of the buffers without outputting directly. In addition, when the input image file 1 is provided in a compressed form, the image data 11 can be decompressed at the stage of reference, or stored in the buffer after being decompressed beforehand.

As for the transition effect, although there are slide-in effect, slide-out effect and the like which will be described later in addition to the scroll effect as shown in FIG. 2, they are basically applicable to the image compositing apparatus in accordance with the present invention by altering the setting method of the drawing source region and drawing target region.

EMBODIMENT 2

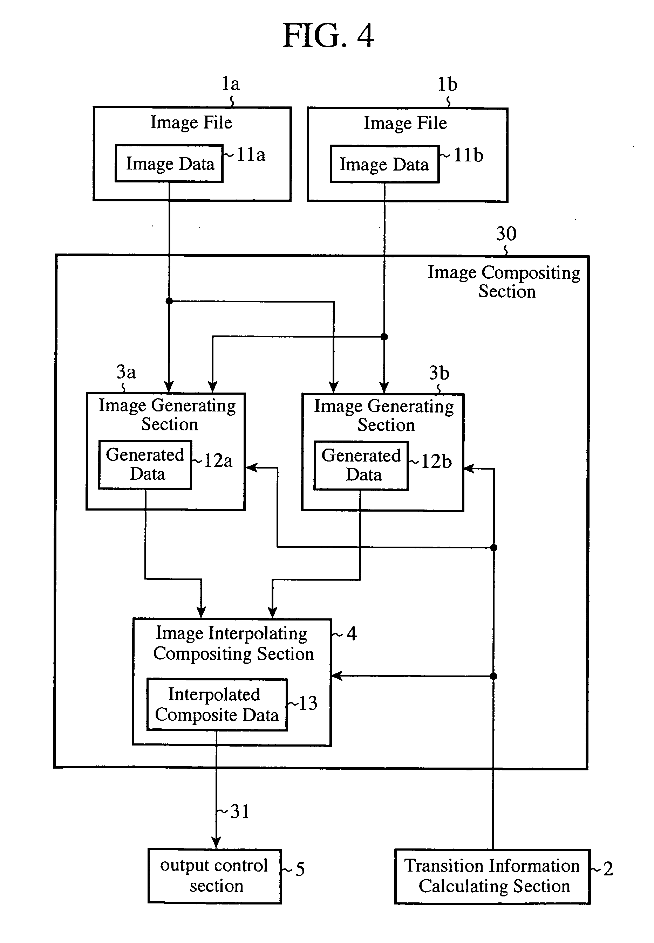

FIG. 4 is a block diagram showing a configuration of the image compositing apparatus of an embodiment 2 in accordance with the present invention. The image compositing apparatus, which causes two images to make a transition according to a designated transition effect, has image files 1a and 1b, the transition information calculating section 2, the image generating sections 3a and 3b, the image interpolating compositing section 4 and the output control section 5; and a block including the image generating sections 3a and 3b and image interpolating compositing section 4 constitutes the image compositing section 30. Incidentally, in FIG. 4, the same reference numerals as those of the embodiment 1 in accordance with the present invention designate the same or like portions.

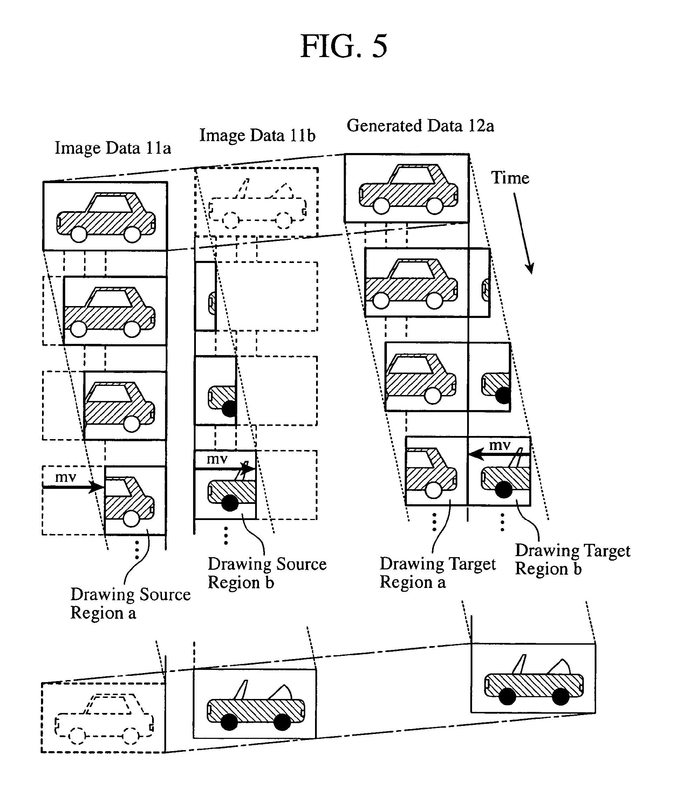

In FIG. 4, the configuration differs from that of FIG. 1 of the foregoing embodiment 1 in that the image file 1 is replaced by the two image files 1a and 1b, and that they are each input to the image generating sections 3a and 3b. Although the method (B) of FIG. 2 of the foregoing embodiment 1 is an example having an image greater than the display limits, the present embodiment 2 will be described by way of example in which the image is divided into two images as shown in FIG. 5, from which the drawing source regions are obtained and pasted together. As in the foregoing embodiment 1, in the embodiment 2 in accordance with the present invention, the transition information supplied from the transition information calculating section 2 to the image generating sections 3a and 3b and image interpolating compositing section 4 is assumed to be the number of pixels moved mv of the image.

Next, the operation of the image compositing apparatus will be described. In FIG. 4, the image files 1a and 1b, which include the image data 11a and 11b, provide the image generating sections 3a and 3b with the image data 11a and 11b as their inputs. As for the image data 11a and 11b, when a buffer can be provided, they are assumed to be output after being extracted from the image files 1a and 1b and stored in the buffer, whereas unless the buffer can be provided, they are assumed to be output while being extracted from the image files 1a and 1b successively. The transition information calculating section 2 calculates the number of pixels moved mv of the image, which corresponds to the transition information indicating the progress of the transition effect.

The image generating section 3a acquires as its input a drawing source region portion of the image data 11a in the image file 1a, which is calculated from the rounded down number of pixels moved reduced to the nearest whole number of the number of pixels moved obtained from the transition information calculating section 2; and outputs as a drawing target region portion of the generated data 12a calculated from the rounded down number of pixels moved just as the drawing source region. Likewise, the image generating section 3a acquires as its input a drawing source region portion of the image data 11b in the image file 1b, which is calculated from the rounded down number of pixels moved; and outputs as a drawing target region portion of the generated data 12a calculated from the rounded down number of pixels moved. As for the generated data 12a, it is assumed that when the image generating section 3a can include the buffer, it is output after being generated and stored after the image data 11a and 11b are read, or that unless it can include the buffer, it is output while being read and generated successively.

In the same manner as the image generating section 3a, the image generating section 3b acquires as its input a drawing source region portion of the image data 11a in the image file 1a, which is calculated from the rounded up number of pixels moved rounded up to the nearest whole number of the number of pixels moved obtained from the transition information calculating section 2; and outputs as a drawing target region portion of generated data 12b calculated from the rounded up number of pixels moved just as the drawing source region. Likewise, the image generating section 3b acquires as its input a drawing source region portion of the image data 11b in the image file 1b, which is calculated from the rounded up number of pixels moved; and outputs as a drawing target region portion of the generated data 12b calculated from the rounded up number of pixels moved just as the drawing source region. As for the generated data 12b, it is assumed that when the image generating section 3b can include the buffer, it is output after being generated and stored after the image data 11a and 11b are read, or that unless it can include the buffer, it is output while being read and generated successively.

The image interpolating compositing section 4 outputs the interpolated composite data 13 by combining the generated data 12a and 12b according to the composite ratio f calculated from the number of pixels moved mv of the image corresponding to the transition information obtained from the transition information calculating section 2.

The interpolated composite data 13 becomes the composite data 31 or the output of the image compositing section 30 as shown in the block diagram of FIG. 4.

The output control section 5 receives the composite data 31 synthesized, and outputs to the external display apparatus (not shown) to be displayed at every drawing timing.

The transition information calculating section 2 updates the number of pixels moved, which is the transition information, and the image compositing apparatus repeats the foregoing operation.

In the embodiment 2 in accordance with the present invention, as a concrete example, a processing procedure will be described of the processing that carries out a right to left scroll effect in the transition time of five seconds between the image data 11a and the image data 11b.

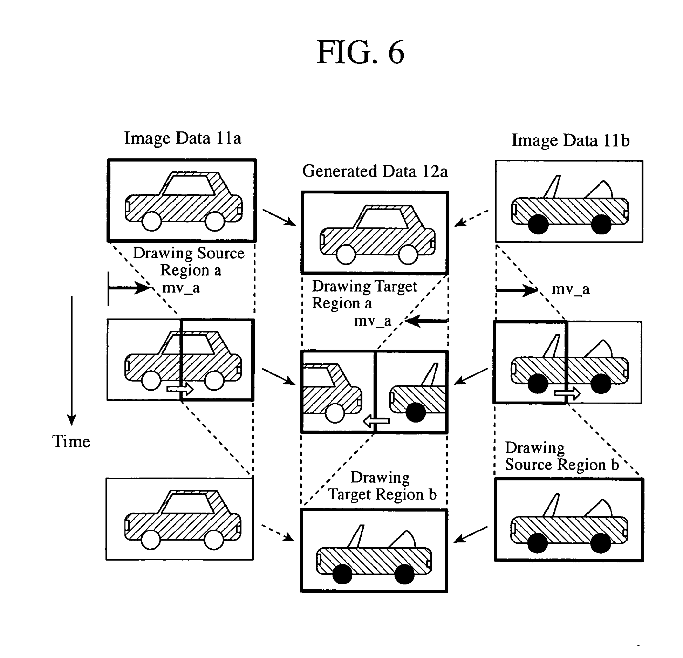

FIG. 6 is a diagram showing changes in the screen owing to the scroll effect of the image data, which shows an example that scrolls from right to left, from the image data 11a to the image data 11b. The term "scroll effect" refers to an effect in which the image displayed previously seems to be pushed out by the image displayed next.

Incidentally, in the example used in the embodiment 2 in accordance with the present invention, the resolutions of the image data 11a, image data 11b and display apparatus are all equal to 320 X 48. For example, when scrolling from right to left at the transition, the drawing source region of the image data 11a at the start of the transition is (0, 0) - (320, 48), at which time there is no drawing source region of the image data 11b. However, as the transition proceeds, the drawing source region of the image data 11a changes to (n, 0) - (320, 48), and the drawing source region of the image data 11b changes to (0, 0) - (n, 48). Incidentally, at that time, the drawing target region of the image data 11a becomes (0, 0) - (320 - n, 48), the drawing target region of the image data 11b becomes (320 - n, 0) - (320, 48). Then, the operation is repeated until the area of the drawing source region and that of the drawing target region of the image data 11a become zero. Thus, the image data 11a seems to be pushed out to the left by the image data 11b. In the following description, the coordinates of a region are denoted as (a, b) - (c, d), which means that it is a rectangular region with the top left coordinate being (a, b) and the right bottom coordinate being (c, d).

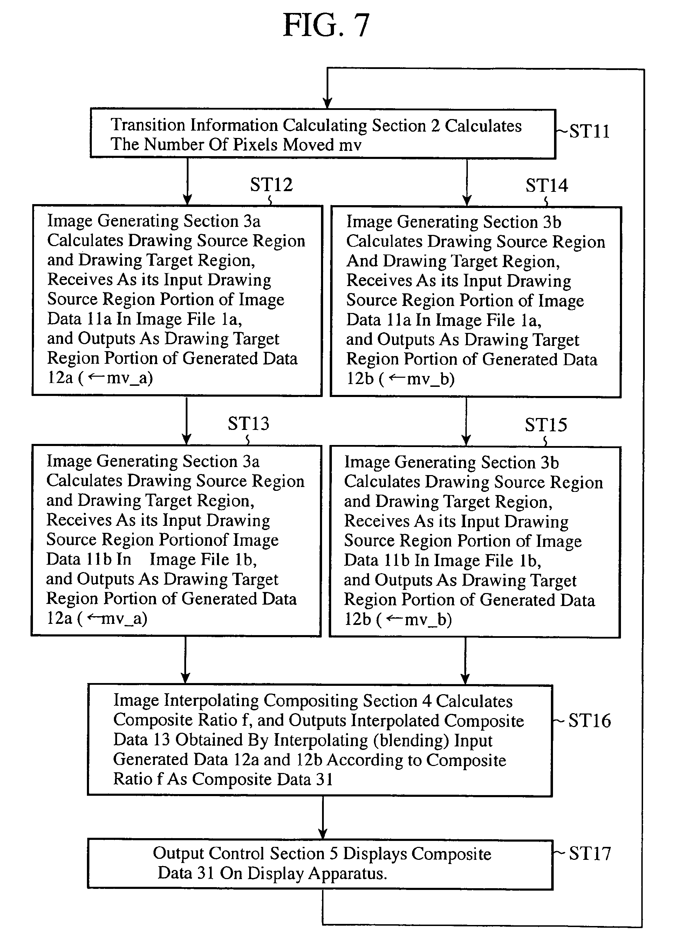

FIG. 7 is a flowchart showing a processing procedure of the image compositing apparatus of the embodiment 2 in accordance with the present invention. Referring to FIG. 7, the processing procedure of the image compositing apparatus will be described.

As at step ST1 of FIG. 3 of the foregoing embodiment 1, at step ST11, the transition information calculating section 2 calculates the number of pixels moved mv of the image at the time before the transition, and notifies the image generating sections 3a and 3b of the region computing formula information for obtaining the drawing source region and drawing target region for each preset image and of the number of pixels moved mv of the image.

The processing from step ST12 to step ST15 corresponds to the processing in which the first drawing source region, first drawing target region, second drawing source region and second drawing target region from step ST2 to step ST5 of FIG. 3 of the foregoing embodiment 1 are replaced by the drawing source region and drawing target region of the image data 11a, and the drawing source region and drawing target region of the image data 11b in the embodiment 2 in accordance with the present invention. As for these four steps, their order of executing the processing can be exchanged as long as the drawing source region and the drawing target region correspond correctly.

At step ST12, the image generating section 3a calculates according to the foregoing expression (1) the number of pixels moved mv_a in the image generating section 3a from the number of pixels moved mv provided by the transition information calculating section 2 and from the region computing formula information for obtaining the drawing source region and drawing target region for each image data to obtain the drawing source region a of the image data 11a in the image file 1a and the drawing target region a of the generated data 12a; and receives as its input the drawing source region a portion of the image data 11a in the image file 1a and outputs as the drawing target region a portion of the generated data 12a.

At step ST13, the image generating section 3a calculates according to the foregoing expression (1) the number of pixels moved mv_a in the image generating section 3a from the number of pixels moved mv provided by the transition information calculating section 2 and from the region computing formula information for obtaining the drawing source region and drawing target region for each image data to obtain the drawing source region b of the image data 11b in the image file 1b and the drawing target region b of the generated data 12a; and receives as its input the drawing source region b portion of the image data 11b in the image file 1b and outputs as the drawing target region b portion of the generated data 12a.

At step ST14, the image generating section 3b calculates according to the foregoing expression (2) the number of pixels moved mv_b in the image generating section 3b from the number of pixels moved mv provided by the transition information calculating section 2 and from the region computing formula information for obtaining the drawing source region and drawing target region for each image data to obtain the drawing source region a of the image data 11a in the image file 1a and the drawing target region a of the generated data 12b; and receives as its input the drawing source region a portion of the image data 11a in the image file 1a and outputs as the drawing target region a portion of the generated data 12b.

At step ST15, the image generating section 3b calculates according to the foregoing expression (2) the number of pixels moved mv_b in the image generating section 3b from the number of pixels moved mv provided by the transition information calculating section 2 and from the region computing formula information for obtaining the drawing source region and drawing target region for each image data to obtain the drawing source region b of the image data 11b in the image file 1b and the drawing target region b of the generated data 12b; and receives as its input the drawing source region b portion of the image data 11b in the image file 1b and outputs as the drawing target region b portion of the generated data 12b.

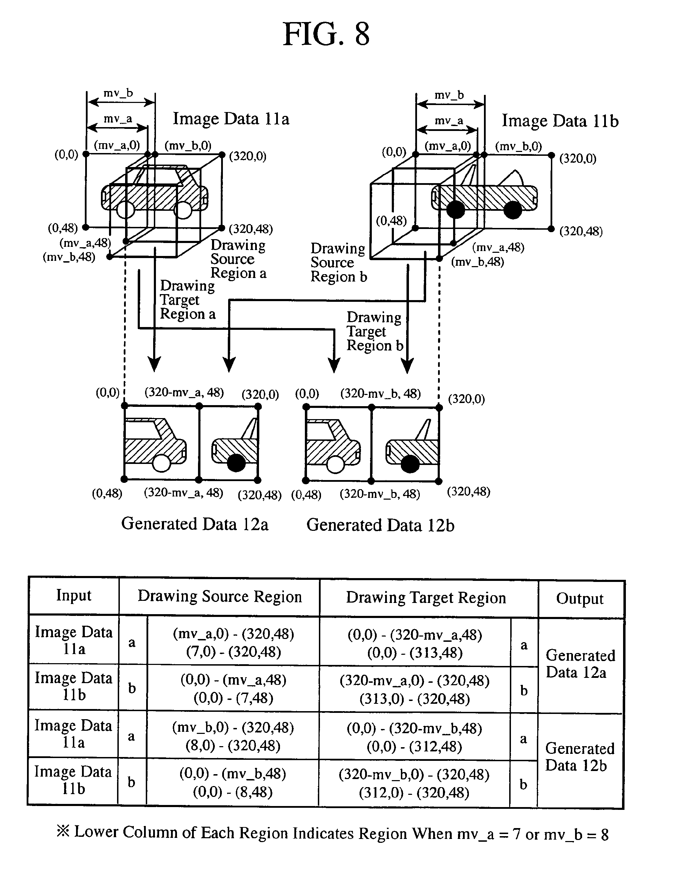

FIG. 8 is a diagram for explaining relationships between the image data 11a and 11b and generated data of the generated data 12a and 12b. Here, it is shown that according to mv_a and mv_b calculated from the number of pixels moved mv, the processing is executed in which the drawing source region a portion cut out from the image data 11a is output to the drawing target region a portions of the generated data 12a and 12b; and the drawing source region b portion cut out from the image data 11b is output to the drawing target region b portions of the generated data 12a and 12b.

For example, when the number of pixels moved mv is 7.466··· pixels, the image generating section 3a reads out the image data 11a on the drawing source region (7,0) - (320, 48) from the image file 1a, and writes it into the drawing target region (0, 0) - (313, 48) of the generated data 12a. In addition, the image generating section 3a reads out the image data 11b on the drawing source region (0, 0) - (7, 48) from the image file 1b, and writes it into the drawing target region (313, 0) - (320, 48) of the generated data 12a.

Likewise, the image generating section 3b reads out the image data 11a on the drawing source region (8,0) - (320, 48) from the image file 1a, and writes it into the drawing target region (0, 0) - (312, 48) of the generated data 12b. In addition, the image generating section 3b reads out the image data 11b on the drawing source region (0, 0) - (8, 48) from the image file 1b, and writes it into the drawing target region (312, 0) - (320, 48) of the generated data 12b.

At step ST16, as at step ST6 of FIG. 3 in the foregoing embodiment 1, using the number of pixels moved mv obtained from the transition information calculating section 2 and the composite ratio f calculated according to the foregoing expression (3), the image interpolating compositing section 4 blends the generated data 12a and generated data 12b according to the foregoing expression (4) , and outputs as the interpolated composite data 13.
The interpolated composite data 13 becomes the composite data 31, the output of the image compositing section 30 shown in the block diagram of FIG. 4.

Finally, at step ST17, as at step ST7 of FIG. 3 of the foregoing embodiment 1, the output control section 5 causes the display apparatus to display on its screen the composite data 31 in synchronization with the drawing timing.

After that, returning to the initial step ST11, the transition information calculating section 2 updates the number of pixels moved mv corresponding to the transition information, and repeats the processing up to step ST17 until the number of pixels moved reaches mv = L.

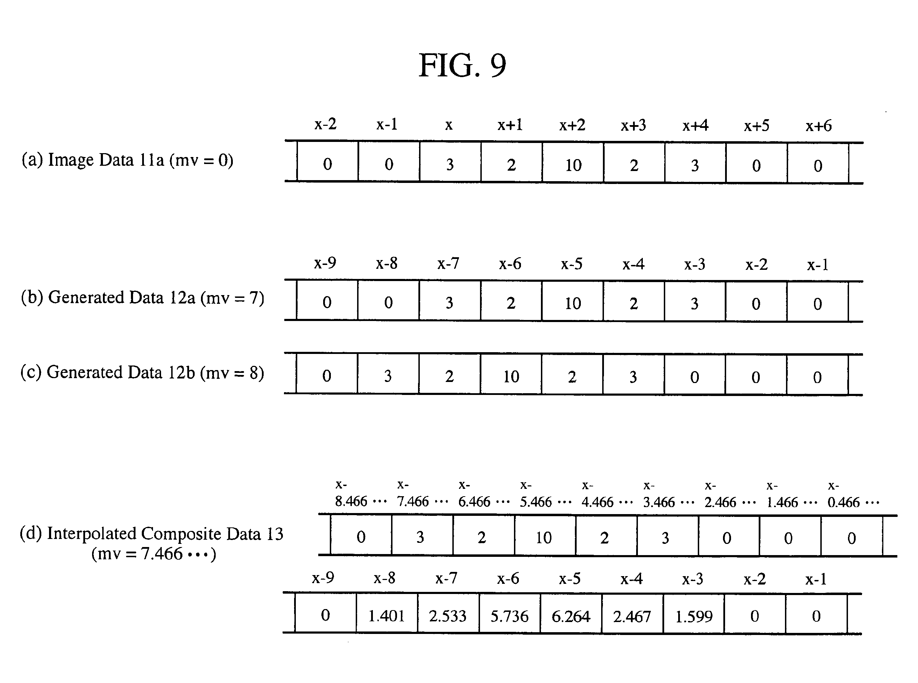

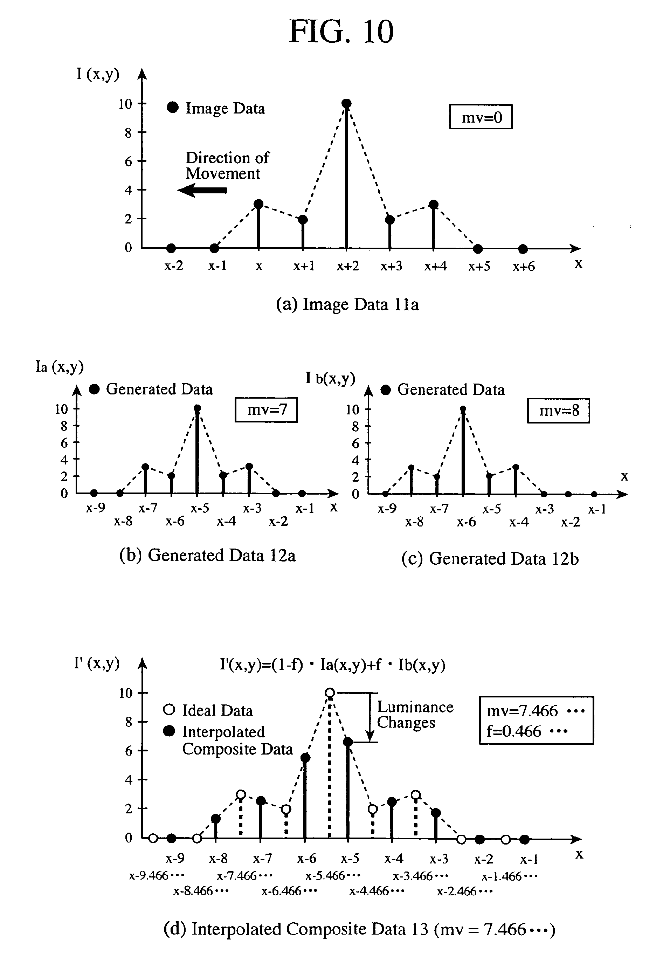

Next, referring to FIG. 9 and FIG. 10, when the image data is input to the image compositing apparatus of the embodiment 2 in accordance with the present invention, changes in the results output from individual processing sections will be described at the time when the number of pixels moved mv = 7.466···. Incidentally, in the embodiment 2 in accordance with the present invention, since the image data 11a and the image data 11b move in the same manner, although changes are shown here when causing a single piece of image data to make a transition in the same manner as in the embodiment 2 in accordance with the present invention, two image data can be handled in the same manner, and it is assumed that the pixels in adjacent regions of the two images are mixed at their boundary.

FIG. 9 shows the changes in the image data in terms of the luminance values in various sections in the image compositing apparatus of the embodiment 2 in accordance with the present invention. In addition, FIG. 10 illustrates the luminance values shown in FIG. 9 with graphs, which demonstrate the changes in the luminance values in a particular region in the horizontal direction, the direction of movement. FIG. 10(a), (b), (c) and (d) correspond to FIG. 9(a), (b), (c) and (d), respectively.

FIG. 9 (a) and FIG. 10 (a) showing it with a graph demonstrate an example of the image data 11a (11b) in the image file 1a (1b).
FIG. 9 (b) and FIG. 10 (b) showing it with a graph demonstrate the generated data 12a which undergoes a transition from the image file 1a (1b) by the image generating section 3a, and is the image data when the rounded down number of pixels moved mv_a = 7, in which case the image data is moved by 7 pixels in the horizontal direction.
FIG. 9(c) and FIG. 10 (c) showing it with a graph demonstrate the generated data 12b which undergoes a transition from the image file 1a (1b) by the image generating section 3b, and is the image data when the rounded up number of pixels moved mv_b = 8, in which case the image data is moved by 8 pixels in the horizontal direction.

FIG. 9 (d) and FIG. 10 (d) showing it with a graph demonstrate the interpolated composite data 13, which undergoes the interpolating composition by the image interpolating compositing section 4, when the number of pixels moved mv = 7.466···. Here, the upper row of FIG. 9 (d) shows ideal image data having decimal coordinates, but the values at the lower row having the integer coordinates are output as actually output pixel values.

Let us explain it with reference to the graphs of FIG. 10. From the number of pixels moved mv = 7.466···, the composite ratio f =0.466··· is calculated by the foregoing expression (3). From the image data of FIG. 10(a) and by using the luminance values $I_a$ (x, y) of the generated data shown in FIG. 10 (b) and the luminance values $I_b$ (x, y) of the generated data shown in FIG. 10(c) and the calculated composite ratio f, the luminance values I'(x, y) of the interpolated composite data after blending shown in FIG. 10(d) are obtained by the foregoing expression (4).

In FIG. 10(d), the points indicated by open circles are luminance values in the ideal data of the interpolated composite data when the number of pixels moved mv = 7.466···, and are obtained by the following expression (6).

$$I_r (x, y) = I(x - mv, y) \qquad (6)$$

where $I_r$(x, y) denotes the luminance value at the point (x, y) in the ideal data.

In contrast, the points indicated by solid circles in FIG. 10(d) are luminance values of the interpolated composite data in the image interpolating compositing section 4 when the number of pixels moved mv = 7.466···. Althoughluminancevariationsoccur with respect to the luminance values of the ideal data, the interpolated composite data with the luminance values are output to the display apparatus as the composite data at the time when the number of pixels moved mv = 7.466···.

In this way, a flexible image compositing apparatus can be realized which can set the image effect time freely, in which the number of pixels moved per period of the vertical synchronizing signal is not limited to an integer only.

The display apparatus has a physical restriction that the luminance value is identical within the rectangle of a pixel, and the luminance value of the pixel with a horizontal coordinate i in the display apparatus is given by the following expression (7).

$$I_{disp}(i) = \int_{x=i}^{x=i+1} I(x) \qquad (7)$$

where $I_{disp}$ (i) is the luminance value displayed at the pixel with the horizontal coordinate value i in the display apparatus. In addition, when the image data is displayed on the display apparatus without scaling, since the size of one pixel depends on the display apparatus, the luminance value of the image data is constant in $i \leq x \leq i + 1$.

In contrast with this, when the image data is moved from right to left by the number of pixels moved mv = 7.466···pixels, the luminance value I'$_{disp}$(i) displayed at the pixel with the horizontal coordinate value i after moving the image in the display apparatus is obtained by the following expression (8).

$$I'_{disp}(i) = \int_{x=i}^{x=i+1} I(x - 7.466\ldots) = (1 - 0.466\ldots) \cdot \int_{x=i}^{x=i+1} I(x - 7) + 0.466\ldots \cdot \int_{x=i}^{x=i+1} I(x - 8) \qquad (8)$$

where I(x - 7) corresponds to the image data of the generated data 12a when moved by the number of pixels equal to the nearest whole number obtained by rounding down the number of pixels moved mv; I(x-8) corresponds to the image data of the generated data 12b when moved by the number of pixels equal to the nearest whole number obtained by rounding up the number of pixels moved mv; and 0.466··· corresponds to the composite ratio f of the fractional part. Accordingly, although the image data with the luminance values I'$_{disp}$(i) is approximate image data to the ideal image data, it corresponds to the image data moved with an accuracy of the decimal pixel (subpixel) unit when displayed on the display apparatus.

As described above, according to the embodiment 2 in accordance with the present invention, in the image compositing apparatus which has a restriction on setting the image transition time because it can move images only with an accuracy of integer pixel unit at every vertical synchronizing signal physically, it creates, when performing the decimal pixel (subpixel) movement corresponding to the numerical value expressing not only the whole number part but also the fractional part, the image data moved by the amount of the nearest whole number to which the number of pixels to be moved is rounded down and the image data moved by the amount of the nearest whole number to which it is rounded up; and combines them using the composite ratio f equal to the fractional part; thereby being able to control the image movement with an accuracy of the decimal pixel (subpixel) unit and to offer an advantage of being able to eliminate the restriction on setting the transition time.

Incidentally, although the embodiment 2 in accordance with the present invention reads out the image data directly from the image file 1a and 1b at every drawing, it can offer the same advantage by storing the image data of the image file 1a and 1b in the image buffer before starting the transition and by reading the image data from the image buffer at the time of drawing.

In addition, although the embodiment 2 in accordance with the present invention has the output buffer in each processing section, it is obvious that the same advantage can be obtained by calculating all or part of the calculations of the image generating sections 3a and 3b and image interpolating compositing section 4 collectively pixel by pixel and by outputting to the output control section 5. For example, the collective calculation of all the processing canbe expressed by the foregoing equation (5).

EMBODIMENT 3

In the foregoing embodiment 2, when moving with an accuracy of the decimal pixel (subpixel) unit, if there is a line that is perpendicular to the moving direction of the image data and has a width of one pixel, or a point of one pixel that has a large luminance difference from its surroundings, the luminance in the surroundings of the foregoing region varies periodically every time the drawing is performed. Thus, as for such a line or point, their size appears to be varied periodically visually, and this can sometimes have a great influence on the quality of the transition effect of the entire image. In view of this, in the embodiment 3 in accordance with the present invention, the image compositing apparatus will be described which can improve the problem by blurring the image data 11a and 11b in the moving direction and by reducing the luminance difference between the adjacent pixels in the moving direction by smoothing the image data 11a and 11b when acquiring the image data 11a and 11b from the image files 1a and 1b as the inputs.

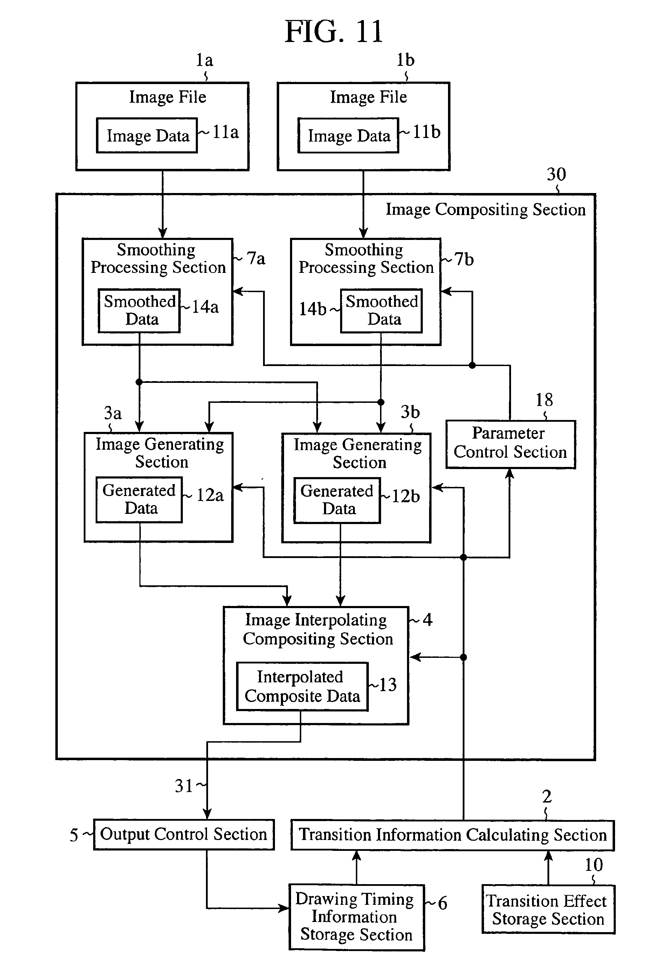

FIG. 11 is a block diagram showing a configuration of the image compositing apparatus of the embodiment 3 in accordance with the present invention. The image compositing apparatus, which makes a transition of two images by a designated transition effect, comprises the image files 1a and 1b, the transition information calculating section 2, the image generating sections 3a and 3b, the image interpolating compositing section 4, the output control section 5, a drawing timing information storage section 6, smoothing processing sections 7a and 7b, a transition effect storage section 10 and a parameter control section 18, in which the configuration block including the parameter control section 18, smoothing processing sections 7a and 7b, image generating sections 3a and 3b and image interpolating compositing section 4 constitutes the image compositing section 30. Incidentally, in FIG. 11, the same reference numerals as those of the foregoing embodiment 1 and the foregoing embodiment 2 designate the same or like sections.

The configuration of FIG. 11 differs from that of FIG. 4 in the foregoing embodiment 2 in that the image data 11a and 11b in the image files 1a and 1b are input to the image generating sections 3a and 3b after they are smoothed through the smoothing processing sections 7a and 7b.

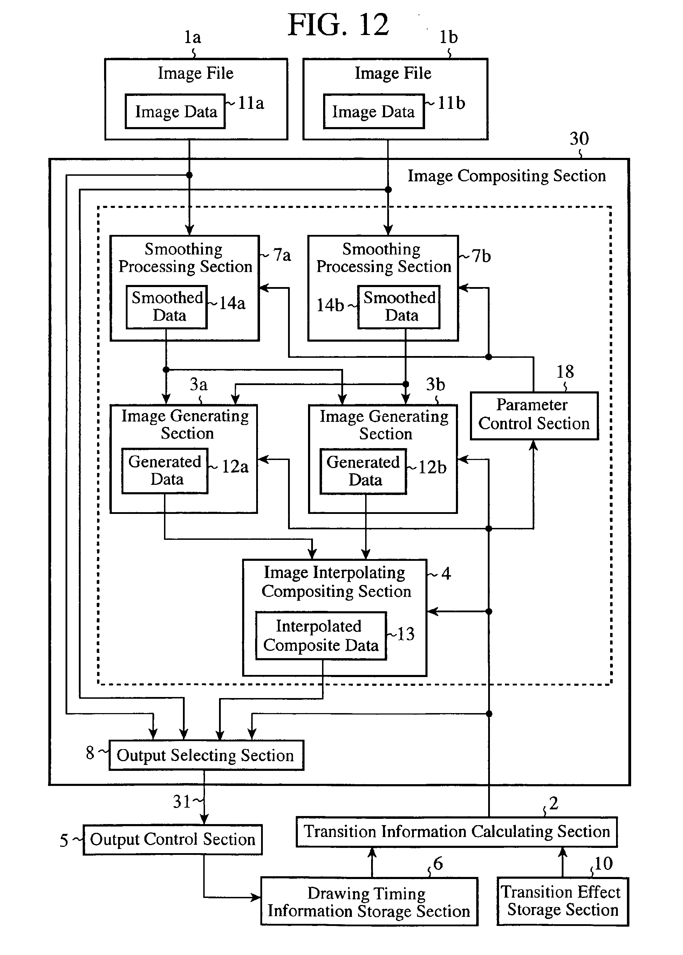

In addition, FIG. 12 is a block diagram showing a variation of the image compositing apparatus of the embodiment 3 in accordance with the present invention. As for the interpolated composite data 13, which is the output of the image interpolating compositing section 4 in the broken line portion corresponding to the image compositing section 30 of FIG. 11 described above, the image compositing apparatus is configured in such a manner as to have an output selecting section 8 immediately after the image interpolating compositing section 4 so that it can display the composite data 31 selected from the interpolated composite data 13 and the image data 11a and 11b.

As in the foregoing embodiment 2, it is assumed in the embodiment 3 in accordance with the present invention that the transition information supplied from the transition information calculating section 2 to the image generating sections 3a and 3b and image interpolating compositing section 4 is the number of pixels moved mv of the image.

Next, the operation of the image compositing apparatus will be described with reference to FIG. 12 including the output selecting section 8.

In FIG. 12, the drawing timing information storage section 6 updates and stores the drawing timing information which is a discriminating value of the drawing timing at which the output control section 5 outputs the image data to the display apparatus.

The transition effect storage section 10 outputs the transition effect information.

The transition information calculating section 2 acquires the drawing timing information from the drawing timing information storage section 6, acquires the transition effect information from the transition effect storage section 10, and calculates, when the transition effect entails pixel movement, the number of pixels moved mv corresponding to the transition information indicating the progress of the transition effect at the next drawing from the drawing timing information acquired.

The parameter control section 18 generates the smoothing parameters according to the type of the transition effect obtained from the transition information calculating section 2.

The image files 1a and 1b include the image data 11a and 11b, and provides the image data 11a and 11b to the smoothing processing sections 7a and 7b as their inputs.

The smoothing processing sections 7a and 7b perform smoothing processing in the image moving direction of the image data 11a and 11b fed from the image files 1a and 1b only in the direction of movement according to the smoothing parameters from the parameter control section 18, and output the smoothed data 14a and 14b. As for the smoothed data 14a and 14b, when the smoothing processing sections 7a and 7b can include a buffer, they output them after reading out and smoothing the image data 11a and 11b and storing them, and when they cannot include the buffer, they output them while reading out and successively smoothing.

The image generating section 3a acquires as its input the drawing source region portion of the smoothed data 14a calculated according to the rounded down number of pixels moved reduced to the nearest whole number of the number of pixels moved fed from the transition information calculating section 2, and outputs as the drawing target region portion of the generated data 12a calculated according to the rounded down number of pixels moved in the same manner as the drawing source region; and acquires as its input the drawing source region portion of the smoothed data 14b calculated according to the rounded down number of pixels moved, and outputs as the drawing target region portion of the generated data 12a calculated according to the rounded down number of pixels moved in the same manner as the drawing source region.

The image generating section 3b acquires as its input the drawing source region portion of the smoothed data 14a calculated according to the rounded up number of pixels moved rounded up to the nearest whole number of the number of pixels moved fed from the transition information calculating section 2, and outputs as the drawing target region portion of the generated data 12b calculated according to the rounded up number of pixels moved in the same manner as the drawing source region; and acquires as its input the drawing source region portion of the smoothed data 14b calculated according to the rounded up number of pixels moved, and outputs as the drawing target region portion of the generated data 12b calculated according to the rounded up number of pixels moved in the same manner as the drawing source region.

The image interpolating compositing section 4 combines the generated data 12a and 12b according to the composite ratio f calculated from the transition information fed from the transition information calculating section 2, and outputs as the interpolated composite data 13.

The output selecting section 8 selects one of the image data 11a, image data 11b and interpolated composite data 13 according to the transition information fed from the transition information calculating section 2, and outputs it. The data output from the output selecting section 8 becomes the composite data 31, the output of the image compositing section 30, as shown in the block diagram of FIG. 12.

In the case of the image compositing apparatus shown in FIG. 11 without having the output selecting section 8, the interpolated composite data 13 which is the output of the image interpolating compositing section 4 becomes the composite data 31, the output of the image compositing section 30.

The output control section 5 receives the composite data 31 output from the image compositing section 30, outputs it to the display apparatus (not shown) at every drawing timing to be displayed, and notifies the drawing timing information storage section 6 of the end of the display.

The transition information calculating section 2 updates the number of pixels moved which is the transition information, and the image compositing apparatus repeats the foregoing operation.

Incidentally, as for the transition effect storage section 10 included in the image compositing apparatus of the embodiment 3 in accordance with the present invention, when the transition information calculating section 2 includes a storage function of the transition effect information of the transition effect storage section 10, the transition effect storage section 10 can be omitted as in the configuration of the image compositing apparatus of the foregoing embodiments 1 and 2.

In the embodiment 3 in accordance with the present invention, a processing procedure will be described as a concrete example of the processing that carries out a right to left scroll effect in the transition time of five seconds across the image data 11a and image data 11b in the same manner as the foregoing embodiment 2.

In addition, in the embodiment 3 in accordance with the present invention, the transition information fed from the transition information calculating section 2 to the image generating sections 3a and 3b indicates the number of pixels moved mv of the image data and the transition effect information the transition effect storage section 10 supplies to the transition information calculating section 2. Here, the term "transition effect information" refers to the type of the transition effect, transition time, and region computing formula information. As the type of the transition effect, there are scroll, slide-in, slide-out, wiping and the like which will be described later.

Incidentally, as for the specifications of the display apparatus connected to the image compositing apparatus of the embodiment 3 in accordance with the present invention, they are assumed to be the same as those of the foregoing embodiment 2.

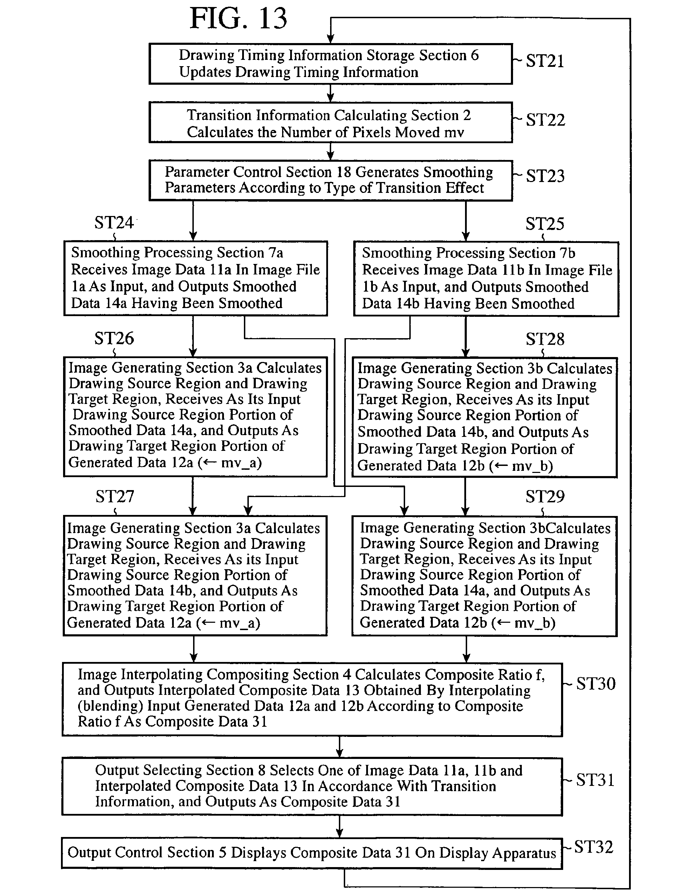

FIG. 13 is a flowchart showing a processing procedure of the image compositing apparatus of the embodiment 3 in accordance with the present invention. Referring to FIG. 13, the processing procedure of the image compositing apparatus based on FIG. 12 will be described.

First, at step ST21, the drawing timing information storage section 6 updates the drawing timing information after the drawing at any given drawing time has been completed during the transition. For example, in the embodiment 3 in accordance with the present invention, it is assume that the drawing timing information consists of the transition start time to having been stored in advance, and the output time $t_n$ to the display apparatus, which is acquired by the output control section 5. Here, the drawing time $t_n$ before the first drawing is to.

Incidentally, although time is used as the drawing timing information in this example, the number of times of displays or the number of occurrences of the vertical synchronizing signal can also be employed. In this case, the transition time can be calculated from the number of times of drawings or the number of occurrences of the vertical synchronizing signal, or conversely the number of times of drawings or the number of occurrences of the vertical synchronizing signal can be calculated from the transition time, to be used as the unit of the drawing timing information.

AtstepST22, the transition information calculating section 2 acquires the drawing timing information from the drawing timing information storage section 6, acquires the transition effect information from the transition effect storage section 10, and calculates, when the transition effect entails the pixel movement, the number of pixels moved mv at the next drawing from the drawing timing information in the same manner as at step ST1 of FIG. 3 in the foregoing embodiment 1.

For example, when the movement is performed at a fixed speed, the number of pixels moved mv is obtained by the following expression (9).

$$mv = p \cdot L \qquad\qquad (9)$$

where p designates a transition progress rate when the transition time is made 100%. As an example, the transition progress rate p can be calculated according to the following expression (10) .

$$p = t/T \qquad\qquad (10)$$

where t designates the relative drawing expected time of the next drawing from the transition start time, which is given by the following expression (11).

$$t = t_n - t_0 + V \qquad\qquad (11)$$

Incidentally, if the drawing timing information uses the number of times of drawings or the number of occurrences of the vertical synchronizing signal as its unit, t can be replaced by the number of times of drawings or the number of occurrences of the vertical synchronizing signal at the next drawing, and T can be replaced by the total number of occurrences of the drawings or the vertical synchronizing signal within the transition time.

At step ST23, the parameter control section 18 generates smoothing parameters indicating the degree of deterioration in clarity through the smoothing processing by the smoothing processing sections 7a and 7b according to the type of the transition effect obtained from the transition information calculating section 2. As the smoothing parameters, it is possible to employ values indicating the degree of deterioration in clarity for generating a spatial filter or a filter to be used, the spatial filter being composed of an M × N pixel region for smoothing in the direction of movement of the individual images according to the type of the transition effect.

In the embodiment 3 in accordance with the present invention, since the movement transition effect is in the horizontal direction, the 3 × 1 spatial filter given by the following expression (12), a small linear spatial filter with a small smoothing effect in the vertical direction, can be used as the smoothing filter.

$$A = (0.25 \quad 0.5 \quad 0.25) \qquad\qquad (12)$$

Conversely, in the case of the movement transition effect in the vertical direction, a 1 × 3 spatial filter given by the following expression (13) obtained by interchanging the row and column of the foregoing spatial filter, a small linear spatial filter with a small smoothing effect in a horizontal direction, is used as the smoothing filter.

$$A = \begin{pmatrix} 0.25 \\ 0.5 \\ 0.25 \end{pmatrix} \qquad\qquad (13)$$

Here, A is a matrix set in the parameter control section 18 in accordance with the type of the transition effect. In the embodiment 3 in accordance with the present invention, the parameter control section 18 selects the spatial filter represented by the foregoing expression (12) or (13) as the smoothing filter according to the type of the transition effect, that is, the transition direction of the transition effect. Incidentally, other than the spatial filter represented by the foregoing expression (12) or (13), any filter can be used in the same manner as long as it can achieve the same or nearly the same effect regardless of the magnitude of the effect, and it is not limited to the coefficients shown above. In addition, although the example is described which moves in the horizontal direction or in the vertical direction in the embodiment 3 in accordance with the present invention, the same effect is obtained in the case of moving in other directions as long as the filter the smoothing processing sections 7a and 7b employ can carry out smoothing in the direction of movement.

Incidentally, the parameter control section 18 can prevent the image from blurring rapidly by gradually increasing the smoothing effect at the start of the transition, by maintaining it after that, and by reducing it gradually before the end of the transition according to the transition information, thereby being able to realize the transition effect with a less uncomfortable feeling with an accuracy of the decimal pixel (subpixel) unit.

At step ST24, according to the smoothing parameters fed from the parameter control section 18, the smoothing processing section 7a performs the smoothing of the image data 11a in the image file 1a by a convolution given by the following expression (14), and outputs the smoothed data 14a.

$$I_{LPF}(x, y) = \sum_{(i,j) \in S} A(i, j) \cdot I(x+i, y+j) \qquad\qquad (14)$$

where $I_{LPF}(x, y)$ is the luminance value at the point (x, y) of the image data output from the smoothing processing section 7a, I (x, y) is the luminance value at the point (x, y) of the image data in the image file 1a input to the smoothing processing section 7a, and S is a rectangular region which satisfies the following expression (15) and the center of which is (0, 0). As for i, j, they are expressed as follows.

$$-floor(M/2) \leqq i \leqq floor(M/2), \ and$$
$$-floor(N/2) \leqq j \leqq floor(N/2) \qquad\qquad (15)$$

A(i, j) is a value of the element in the ith row and the jth column of the matrix A which is the smoothing parameters fed from the parameter control section 18.

The processing carries out the smoothing of the image data 11a in the image file 1a only in the direction of movement.

At step ST25, in the same manner as the smoothing processing section 7a, the smoothing processing section 7b performs the smoothing of the image data 11b in the image file 1b by the convolution given by the foregoing expression (14) according to the smoothing parameters fed from the parameter control section 18, and outputs the smoothed data 14b. The processing carries out the smoothing of the image data 11b in the image file 1b only in the direction of movement.

The processing from step ST26 to step ST29 corresponds to the processing from step ST12 to step ST15 of FIG. 7 of the foregoing embodiment 2, in which the inputs to the image generating sections 3a and 3b are changed from the image data 11a and 11b in the image files 1a and 1b to the smoothed data 14a and 14b the smoothing processing sections 7a and 7b output. As for these four steps, their order of executing the processing can be exchanged as long as the drawing source region and the drawing target region correspond correctly.

At step ST26, the image generating section 3a obtains the drawing source region a of the smoothed data 14a and the drawing target region a of the generated data 12a when the number of pixels moved mv_a in the image generating section 3a is floor (mv) from the number of pixels moved mv provided by the transition information calculating section 2 and from the region computing formula information for obtaining the drawing source region and drawing target region of each image data; acquires the drawing source region a portion of the smoothed data 14a as the input; and outputs as the drawing target region a portion of the generated data 12a.

At step ST27, the image generating section 3a obtains the drawing source region b of the smoothed data 14b and the drawing target region b of the generated data 12a when the number of pixels moved mv_a in the image generating section 3a is floor (mv) from the number of pixels moved mv provided by the transition information calculating section 2 and from the region computing formula information for obtaining the drawing source region and drawing target region of each image data; acquires the drawing source region b portion of the smoothed data 14b as the input; and outputs as the drawing target region b portion of the generated data 12a.

At step ST28, the image generating section 3b obtains the drawing source region b of the smoothed data 14b and the drawing target region b of the generated data 12b when the number of pixels moved mv_b in the image generating section 3b is ceil (mv) from the number of pixels moved mv provided by the transition information calculating section 2 and from the region computing formula information for obtaining the drawing source region and drawing target region of each image data; acquires the drawing source region b portion of the smoothed data 14b as the input; and outputs as the drawing target region b portion of the generated data 12b.

At step ST29, the image generating section 3b obtains the drawing source region a of the smoothed data 14a and the drawing target region a of the generated data 12b when the number of pixels moved mv_b in the image generating section 3b is ceil (mv) from the number of pixels moved mv provided by the transition information calculating section 2 and from the region computing formula information for obtaining the drawing source region and drawing target region of each image data; acquires the drawing source region a portion of the smoothed data 14a as the input; and outputs as the drawing target region a portion of the generated data 12b.

At step ST30, in the same manner as the foregoing embodiment 2, the image interpolating compositing section 4 calculates the composite ratio f according to the number of pixels moved fed from the transition information calculating section 2, blends the generated data 12a and 12b according to the composite ratio f calculated, and outputs as the interpolated composite data 13.

At step ST31, if the number of pixels moved obtained from the transition information calculating section 2 is mv = 0, the output selecting section 8 outputs the image data in the image file 1a. If the number of pixels moved mv = L, it outputs the image data in the image file 1b. In contrast, in the remaining cases, it outputs the image data of the interpolated composite data 13. The output of the output selecting section 8 is supplied to the output control section 5 as the composite data 31.

At step ST32, the output control section 5 causes the display apparatus (not shown) to display on its screen the composite data 31 output from the output selecting section 8 in synchronization with the vertical synchronizing signal, and notifies the drawing timing information storage section 6 of the end of the display.

After that, returning to step ST21, the drawing timing information storage section 6 updates the drawing time to the display apparatus, again, and repeats the processing up to step ST32 until the number of pixels moved reaches mv = L.

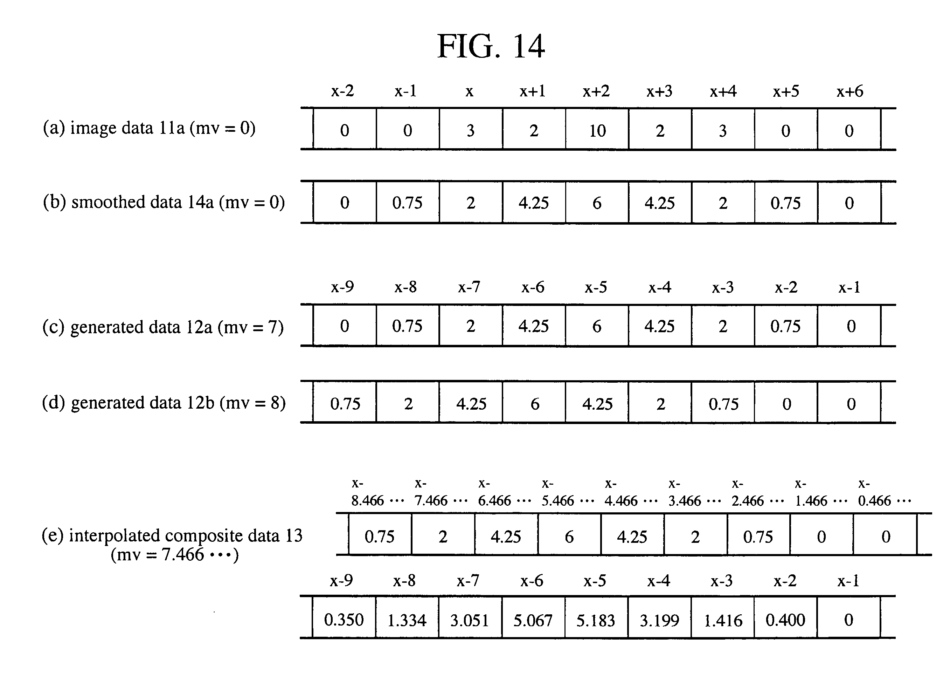

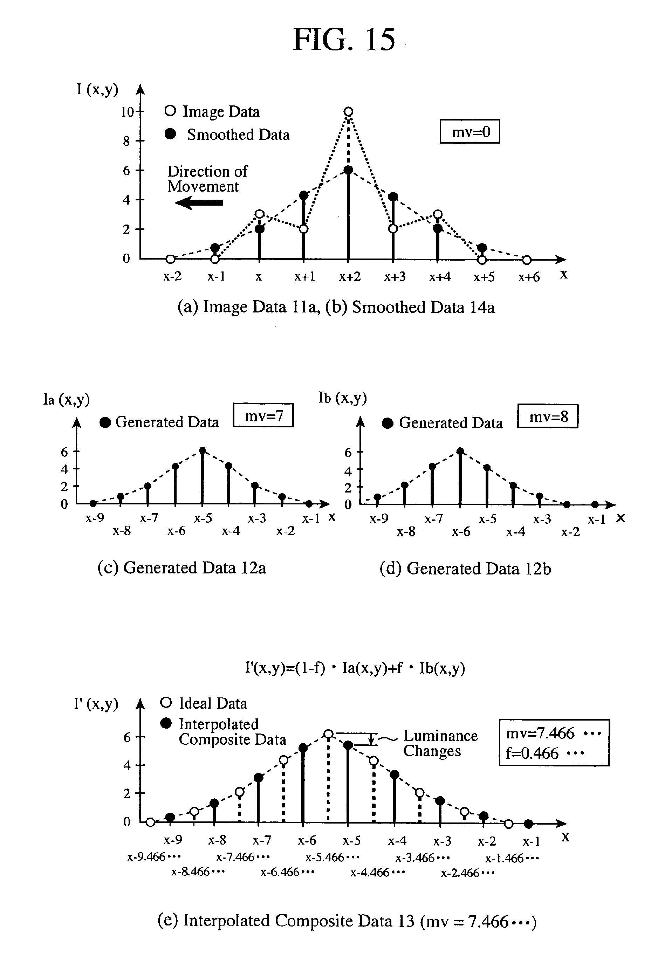

Next, referring to FIG. 14 and FIG. 15, when the image data is input to the image compositing apparatus of the embodiment 3 in accordance with the present invention, changes in the results output from individual processing sections will be described at the time when the number of pixels moved mv = 7.466···.

FIG. 14 shows the changes in the image data in terms of the luminance values in various sections in the image compositing apparatus of the embodiment 3 in accordance with the present invention. In addition, FIG. 15 illustrates the luminance values shown in FIG. 14 with graphs, which demonstrate the changes in the luminance values in a particular region in the horizontal direction, the direction of movement. FIG. 15 (a), (b), (c), (d) and (e) correspond to FIG. 14(a), (b), (c), (d) and (e), respectively.

FIG. 14(a) and FIG. 15 (a) showing it with open circles in a graph demonstrate an example of the image data 11a (11b) in the image file 1a (1b).

FIG. 14(b) and FIG. 15(b) showing it with solid circles in a graph demonstrate the smoothed data 14a (14b) obtained by smoothing the image data 11a (11b) in the smoothing processing section 7a (7b). Here, since the matrix, the smoothing parameters used, relates to the movement in the horizontal direction, it is assumed that the matrix is given by the foregoing expression (12).

FIG. 14 (c) and FIG. 15 (c) showing it with a graph demonstrate the generated data 12a obtained by making a transition of the smoothed data 14a (14b) in the image generating section 3a when the rounded down number of pixels moved mv_a = 7, in which case the image data is moved by 7 pixels in the horizontal direction.

FIG. 14 (d) and FIG. 15 (d) showing it with a graph demonstrate the generated data 12b obtained by making a transition of the smoothed data 14a (14b) in the image generating section 3b when the rounded up number of pixels moved mv_b = 8, in which case the image data 11 is moved by 8 pixels in the horizontal direction.

FIG. 14 (e) and FIG. 15 (e) showing it with a graph demonstrate the interpolated composite data 13, which undergoes the interpolating composition by the image interpolating compositing section 4, when the number of pixels moved mv = 7.466···. Here, the upper row of FIG. 14 (e) shows ideal image data having decimal coordinates, but the values at the lower row having the integer coordinates are output as actually output pixel values.

Let us explain it with reference to the graphs of FIG. 15. From the number of pixels moved mv = 7.466···, the composite ratio f = 0.466··· is calculated by the foregoing expression (3). From the luminance values of the smoothed data of FIG. 15(b) and by using the luminance values $I_a$ (x, y) of the generated data shown in FIG. 15 (c) and the luminance values $I_b$ (x, y) of the generated data shown in FIG. 15 (d) and the calculated composite ratio f, the luminance values I' (x, y) of the interpolated composite data after blending shown in FIG. 15 (e) are obtained by the foregoing expression (4).

In FIG. 15(e), the points indicated by open circles are luminance values in the ideal data of the interpolated composite data when the number of pixels moved mv = 7.466···, and are obtained by the foregoing expression (6). In contrast, the points indicated by solid circles in FIG. 15(e) are luminance values of the interpolated composite data in the image interpolating compositing section 4 when the number of pixels moved mv = 7.466···. Althoughluminancevariationsoccur with respect to the luminance values of the ideal data, the interpolated composite data with the luminance values are output to the display apparatus as the composite data at the time when the number of pixels moved mv = 7.466···.

Incidentally, it is found from FIG. 15(c) and FIG. 15(e) that the luminance variations occur in the embodiment 3 in accordance with the present invention by comparing the image moved by the decimal pixels (subpixel) and the image moved by the integer pixels. However, by comparing FIG. 15 (c) with FIG. 15(e), FIG. 10(b) with FIG. 10(d) of the foregoing embodiment 2 and FIG. 15(e) with FIG. 10(d) of the foregoing embodiment 2, it is found that the luminance variations are much smaller in the embodiment 3 in accordance with the present invention than in the foregoing embodiment 2, thereby offering an advantage of being able to reduce periodical luminance variations during the image movement.

In this way, the image compositing apparatus can be realized which can set the image effect time freely without limiting the number of pixels moved per period of the vertical synchronizing signal to an integer only, and which can reduce the quality deterioration of the transition effect due to the periodical luminance variations in pixels that have large luminance variations between adjacent pixels in the direction of movement. In addition, providing the drawing timing information storage section 6 makes the drawing unaffected by the previous drawing contents. Thus, even if the drawing has not been completed within one period of the vertical synchronizing signal and waits for the next vertical synchronizing signal, the display can be performed as scheduled. This makes it possible to realize the image compositing apparatus capable of completing the transition effect within the transition time. Furthermore, providing the transition effect storage section 10 makes it possible to realize the image compositing apparatus capable of performing different transition effect every time of the image transition.

As described above, according to the embodiment 3 in accordance with the present invention, in the image compositing apparatus which has a restriction on setting the image transition time because it can move images only with an accuracy of integer pixel unit at every vertical synchronizing signal physically, it creates, when performing the decimal pixel (subpixel) movement corresponding to the numerical value expressing not only the whole number part but also the fractional part, the image data moved by the amount of the nearest whole number to which the number of pixels to be moved is rounded down and the image data moved by the amount of the nearest whole number to which it is rounded up; and combines them using the composite ratio f equal to the fractional part; thereby being able to control the image movement with an accuracy of the decimal pixel (subpixel) unit and to offer an advantage of being able to eliminate the restriction on setting the transition time.

In addition, according to the embodiment 3 in accordance with the present invention, the smoothing processing sections 7a and 7b smooth the image data by the convolution of the smoothing parameters into the image data and reduce the contrast between two adjacent pixels in the moving direction of the individual pixels, thereby offering an advantage of being able to reduce periodical large luminance variations occurring during the decimal pixel (subpixel) movement.

Furthermore, according to the embodiment 3 in accordance with the present invention, adding the output selecting section 8 as in the image compositing apparatus of FIG. 12 offers an advantage of being able to display a high-definition image of the original image in a state where the image remains at rest before the start or after the completion of the transition effect of the image.

Incidentally, in the embodiment 3 in accordance with the present invention, it is obvious that even the image compositing apparatus of FIG. 11 without including the output selecting section 8 can gain the same advantage as described above by setting the filter component values in the smoothing parameters at the transition start and transition completion at A(0, 0) = 1 and A(i, j) = 0 (i ≠ 0 and j ≠ 0) by the parameter control section 18 because the smoothing effect is not achieved in this case.

In addition, although the embodiment 3 in accordance with the present invention reads out the image data 11a and 11b from the image files 1a and 1b every time of the drawing, it is obvious that it can also read out the image data 11a and 11b from the image files 1a and 1b and store them in an image buffer, and read out the image data 11a and 11b from the image buffer every time of the drawing, offering the same advantage. Likewise, when the smoothing parameters of the smoothing processing sections 7a and 7b are constant during the transition, it is also possible to read out the image data 11a and 11b from the image files 1a and 1b in advance, to store the smoothed data 14a and 14b smoothed by the smoothing processing sections 7a and 7b in a smoothing buffer, and to read out the smoothed data 14a and 14b from the smoothing buffer every time of the drawing, which can not only offer the same advantage as described above, but reduce the processing because it is enough to execute the smoothing processing only at the start of the transition.

EMBODIMENT 4

The embodiment 4 in accordance with the present invention will now be described by way of example of the image compositing apparatus in which the smoothing processing sections 7a and 7b in the foregoing embodiment 3 are placed at positions different from those in the configuration of the image compositing apparatus of the foregoing embodiment 3.

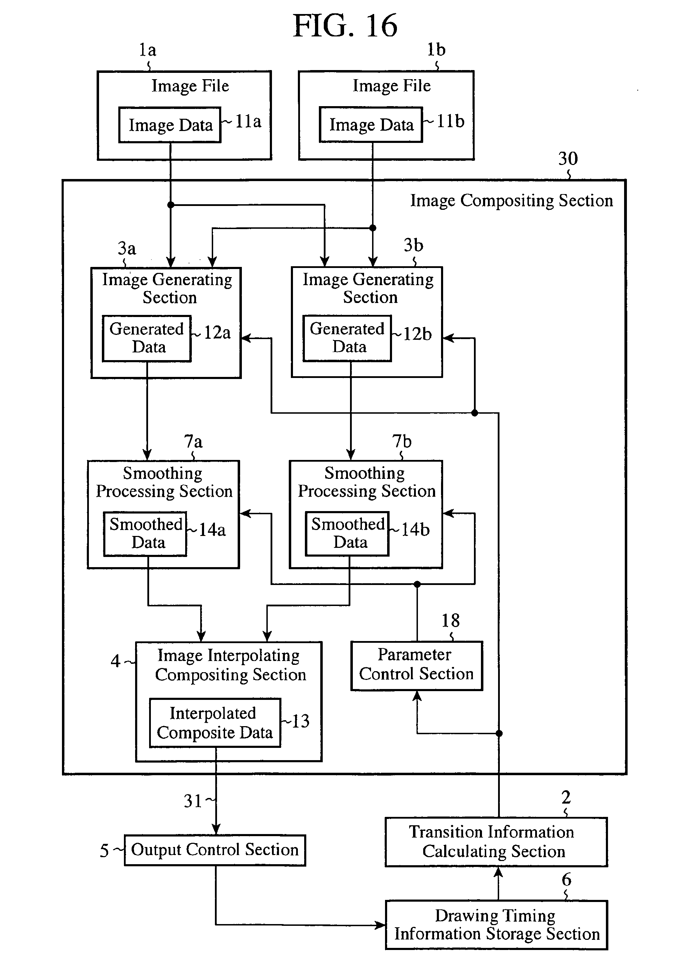

FIG. 16 is a block diagram showing a configuration of the image compositing apparatus of the embodiment 4 in accordance with the present invention. The image compositing apparatus, which makes a transition of two images by the designated transition effect, comprises the image files 1a and 1b, the transition information calculating section 2, the image generating sections 3a and 3b, the image interpolating compositing section 4, the output control section 5, the drawing timing information storage section 6, the smoothing processing sections 7a and 7b and the parameter control section 18; in which the configuration block including the image generating sections 3a and 3b, parameter control section 18, smoothing processing sections 7a and 7b and image interpolating compositing section 4 constitutes the image compositing section 30. Incidentally, in FIG. 16, the same reference numerals as those of the foregoing embodiment 1 to the foregoing embodiment 3 designate the same or like sections.

The configuration of FIG. 16 differs from that of FIG. 11 in the foregoing embodiment 3 in that the target of the smoothing processing of the smoothing processing sections 7a and 7b is changed from the image data 11a and 11b before input to the image generating sections 3a and 3b to the generated data 12a and 12b the image generating sections 3a and 3b generate. In addition, although the transition effect storage section 10 is removed from the configuration, it can be added to the configuration as in the foregoing embodiment 3.

In the embodiment 4 in accordance with the present invention, the transition information provided from the transition information calculating section 2 to the image generating sections 3a and 3b and image interpolating compositing section 4 is assumed to be the number of pixels moved mv of the image as in the foregoing embodiment 1 to the foregoing embodiment 3.

Next, the operation of the image compositing apparatus will be described.
In FIG. 16, the drawing timing information storage section 6 updates and stores the drawing timing information which is a discriminating value of the drawing timing at which the output control section 5 outputs the image data to the display apparatus in the same manner as in FIG. 11 of the foregoing embodiment 3.
The transition information calculating section 2 acquires the drawing timing information from the drawing timing information storage section 6, and calculates from the drawing timing information acquired the number of pixels moved mv corresponding to the transition information indicating the progress of the transition effect at the next drawing.
The parameter control section 18 generates the smoothing parameters according to the type of the transition effect designated in advance.

The image files 1a and 1b and image generating sections 3a and 3b have the same configurations as those shown in FIG. 4 of the foregoing embodiment 2.
The smoothing processing sections 7a and 7b perform, as to the generated data 12a and 12b the image generating sections 3a and 3b output, the smoothing processing only in the direction of movement of the image in according to the smoothing parameters from the parameter control section 18, and output the smoothed data 14a and 14b.

The image interpolating compositing section 4 combines the smoothed data 14a and 14b according to the composite ratio f calculated from the transition information fed from the transition information calculating section 2, and outputs as the interpolated composite data 13.
As shown in the block diagram of FIG. 16, the interpolated composite data 13 becomes the composite data 31, which is the output of the image compositing section 30.
In the same manner as in FIG. 4, the output control section 5 receives the synthesized composite data 31, and outputs it to be displayed on the external display apparatus (not shown) at every drawing timing.
The transition information calculating section 2 updates the number of pixels moved which is the transition information, and the image compositing apparatus repeats the foregoing operation.

Incidentally, as for the specifications of the display apparatus connected to the image compositing apparatus of the embodiment 4 in accordance with the present invention, and the transition effect described in the embodiment 4 in accordance with the present invention, they are assumed to be the same as those in the foregoing embodiment 2.

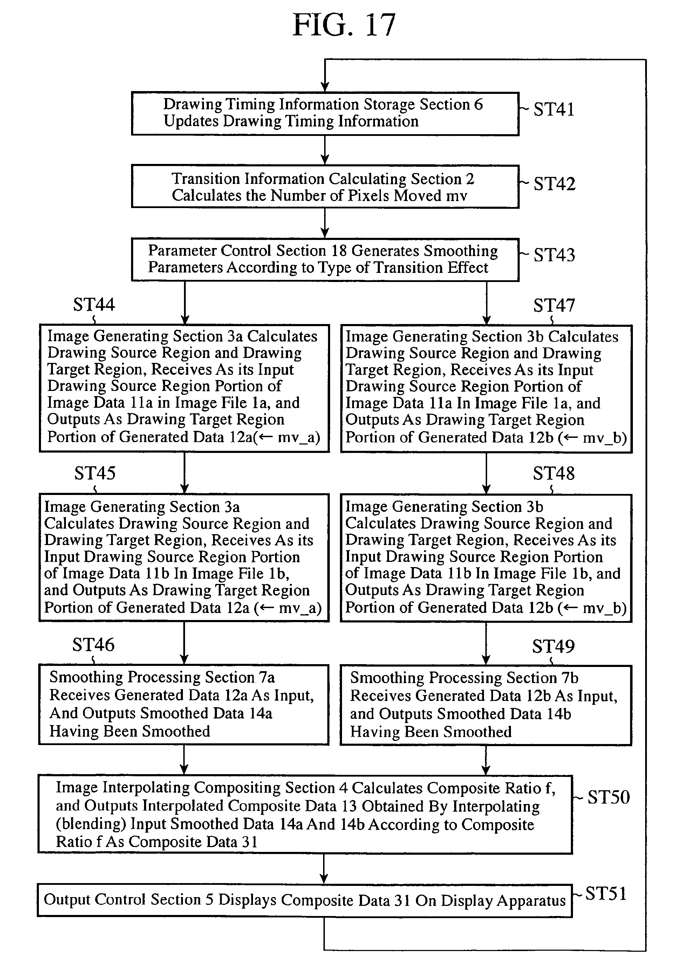

FIG. 17 is a flowchart showing a processing procedure of the image compositing apparatus of the embodiment 4 in accordance with the present invention. Referring to FIG. 17, the processing procedure of the image compositing apparatus will be described.

In the processing at step ST41, in the same manner as in the processing at step ST21 shown in FIG. 13 of the foregoing embodiment 3, the drawing timing information storage section 6 updates the drawing timing information after the drawing at any given drawing time $t_n$ has been completed during the transition.

At step ST42, the transition information calculating section 2 acquires the drawing timing information from the drawing timing information storage section 6, and calculates the number of pixels moved mv corresponding to the transition information indicating the progress of the transition effect at the next drawing from the drawing timing information obtained.

At step ST43, the parameter control section 18 generates the smoothing parameters according to the prescribed type of the transition effect in the same manner as the processing at step ST23 shown in FIG. 13 of the foregoing embodiment 3.

The processing at step ST44 and ST45 performs the same processing as the processing at steps ST12 and ST13 shown in FIG. 7 of the foregoing embodiment 2.

At step ST46, according to the smoothing parameters fed from the parameter control section 18, the smoothing processing section 7a performs the smoothing of the generated data 12a by the convolution given by the foregoing expression (14), and outputs the smoothed data 14a. The processing carries out the smoothing of the generated data 12a only in the direction of movement.

The processing at step ST47 and ST48 performs the same processing as the processing at steps ST14 and ST15 shown in FIG. 7 of the foregoing embodiment 2.

At step ST49, according to the smoothing parameters fed from the parameter control section 18, the smoothing processing section 7b performs the smoothing of the generated data 12b by the convolution given by the foregoing expression (14), and outputs the smoothed data 14b. The processing carries out the smoothing of the generated data 12b only in the direction of movement.

As for steps ST44 and ST45 and steps ST47 and ST48, their order of executing the processing can be exchanged as long as the drawing source region and the drawing target region correspond correctly. Then, after the image generating sections 3a and 3b generate the generated data 12a and 12b, the smoothing processing sections 7a and 7b can generate the smoothed data 14a and 14b by performing the smoothing processing on the generated data 12a and 12b at steps ST46 and ST49.

At step ST50, the image interpolating compositing section 4 calculates the composite ratio f in the same manner as in the foregoing embodiment 2 according to the number of pixels moved fed from the transition information calculating section 2, blends the smoothed data 14a and 14b according to the composite ratio f calculated, and outputs the interpolated composite data 13.

The processing at step ST51 executes the same processing as the processing at step ST17 shown in FIG. 7 of the foregoing embodiment 2.

After that, returning to step ST41, the drawing timing information storage section 6 updates the drawing time to the display apparatus, again, and repeats the processing up to step ST51 until the number of pixels moved reaches mv = L.

In this way, the image compositing apparatus can be realized which can set the image effect time freely without limiting the number of pixels moved per period of the vertical synchronizing signal to an integer only, and which can reduce the quality deterioration owing to the periodical luminance variations in pixels that have large luminance variations between adjacent pixels in the direction of movement.

As described above, according to the embodiment 4 in accordance with the present invention, in the image compositing apparatus which has a restriction on setting the image transition time because it can move images only with an accuracy of integer pixel unit at every vertical synchronizing signal physically, it creates, when performing the decimal pixel (subpixel) movement corresponding to the numerical value expressing not only the whole number part but also the fractional part, the image data moved by the amount of the nearest whole number to which the number of pixels to be moved is rounded down and the image data moved by the amount of the nearest whole number to which it is rounded up; and combines them using the composite ratio f equal to the fractional part; thereby being able to control the image movement with an accuracy of the decimal pixel (subpixel) unit and to offer an advantage of being able to eliminate the restriction on setting the transition time.

In addition, according to the embodiment 4 in accordance with the present invention, the smoothing processing sections 7a and 7b smooth the image data by the convolution of the smoothing parameters into the image data and reduce the contrast between two adjacent pixels in the moving direction of the individual pixels, thereby offering an advantage of being able to reduce periodical large luminance variations occurring during the decimal pixel (subpixel) movement.

Furthermore, according to the embodiment 4 in accordance with the present invention, the output selecting section 8 can be added in the same manner as in the image compositing apparatus of FIG. 12 of the foregoing embodiment 3. This offers an advantage of being able to display a high-definition image of the original image in a state where the image remains at rest before the start or after the completion of the transition effect of the image.

Incidentally, although the embodiment 4 in accordance with the present invention reads out the image data from the image files every time of the drawing, it is obvious that it can also read out the image data from the image files 1a and 1b and store them in an image buffer in advance, and read out the image data from the image buffer every time of the drawing, offering the same advantage.

EMBODIMENT 5

The embodiment 5 in accordance with the present invention will now be described by way of example of the image compositing apparatus in which the smoothing processing sections 7a and 7b are placed at positions different from those in the configuration of the image compositing apparatus of the foregoing embodiment 3 or of the foregoing embodiment 4.

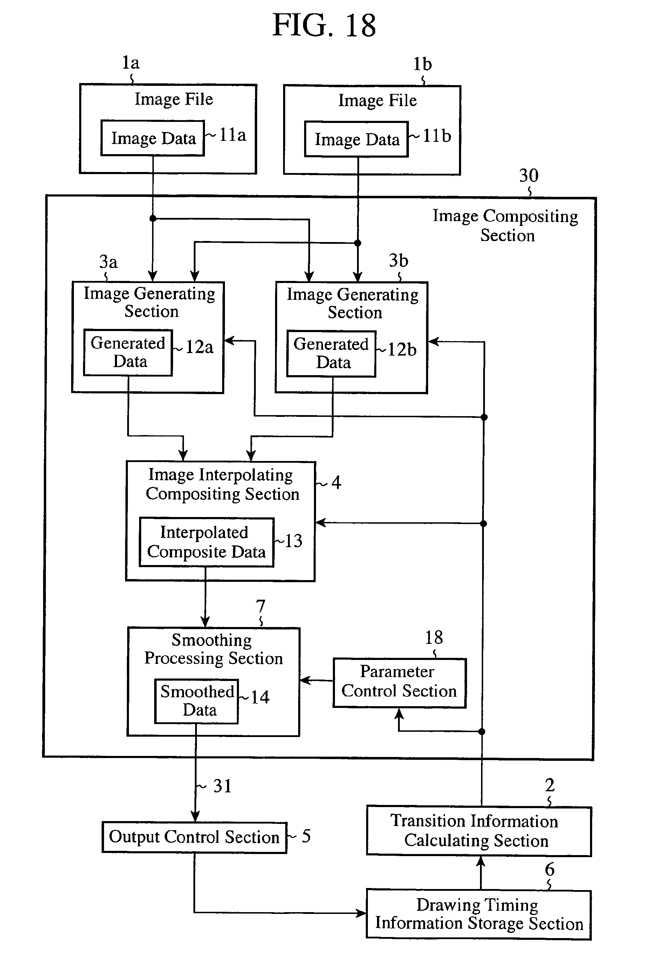

FIG. 18 is a block diagram showing a configuration of the image compositing apparatus of the embodiment 5 in accordance with the present invention. The image compositing apparatus, which makes a transition of two images by the designated transition effect, comprises the image files 1a and 1b, the transition information calculating section 2, the image generating sections 3a and 3b, the image interpolating compositing section 4, the output control section 5, the drawing timing information storage section 6, the smoothing processing section 7 and the parameter control section 18; in which the configuration block including the image generating sections 3a and 3b, image interpolating compositing section 4, parameter control section 18 and smoothing processing section 7 constitutes the image compositing section 30. Incidentally, in FIG. 18, the same reference numerals as those of the foregoing embodiment 1 to the foregoing embodiment 4 designate the same or like sections.

The image compositing apparatus shown in FIG. 18 integrates the two smoothing processing sections 7a and 7b of the image compositing apparatus shown in FIG. 11 of the foregoing embodiment 3 into a single smoothing processing section 7, and places it at the position immediately after the image interpolating compositing section 4.

The configuration in FIG. 18 differs from that of FIG. 11 in the foregoing embodiment 3 in that although the foregoing embodiment 3 uses the interpolated composite data 13 of the image interpolating compositing section 4 as the composite data 31 the image compositing section 30 outputs, the embodiment 5 in accordance with the present invention is configured in such a manner that the smoothed data 14 obtained by the smoothing processing of the interpolated composite data 13 by the displaced smoothing processing section 7 is output as the composite data 31.

Next, the operation of the image compositing apparatus will be described.
As for the drawing timing information storage section 6, transition information calculating section 2 and parameter control section 18, they have the same configurations as their counterparts shown in FIG. 16 of the foregoing embodiment 4. In addition, as for the image files 1a and 1b, image generating sections 3a and 3b and image interpolating compositing section 4, they have the same configurations as their counterparts shown in FIG. 4 of the foregoing embodiment 2.

The smoothing processing section 7 receives the interpolated composite data 13 as its input, performs the smoothing processing in the image moving direction and only in the direction of movement according to the smoothing parameters, and outputs the smoothed data 14.
The smoothed data 14 becomes the composite data 31, which is the output of the image compositing section 30 as shown in the block diagram of FIG. 18.
The output control section 5 outputs the image data stored in the composite data 31 to the display apparatus at every drawing timing, and notifies the drawing timing information storage section 6 of the completion of the display.

Next, the operation will be described.
Incidentally, as for the specifications of the display apparatus connected to the image compositing apparatus of the embodiment 5 in accordance with the present invention and the transition effect described in the embodiment 5 in accordance with the present invention, they are assumed to be the same as those of the foregoing embodiment 2.

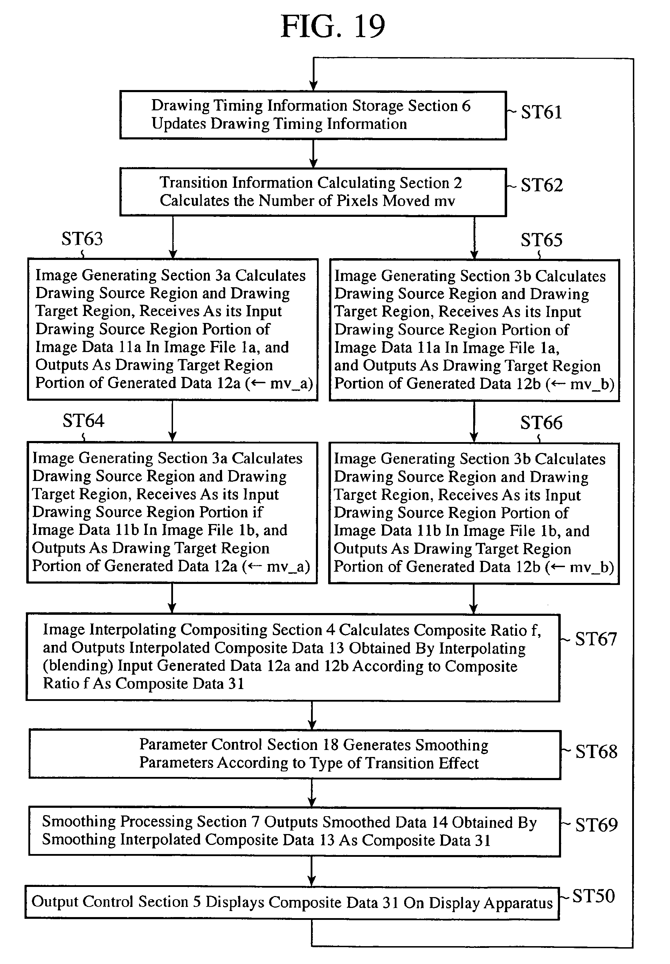

FIG. 19 is a flowchart showing a processing procedure of the image compositing apparatus of the embodiment 5 in accordance with the present invention. Referring to FIG. 19, the processing procedure of the image compositing apparatus will be described.
The processing at step ST61 executes the same processing as the processing at step ST21 shown in FIG. 13 of the foregoing embodiment 3: the drawing timing information storage section 6 updates the drawing timing information after the drawing at any given drawing time $t_n$ has been completed during the transition.

The processing at step ST62 executes the same processing as the processing at step ST22 shown in FIG. 13 of the foregoing embodiment 3.
The processing at steps ST63 and ST64 executes the same processing as the processing at steps ST12 and ST13 shown in FIG. 7 of the foregoing embodiment 2.
The processing at steps ST65 and ST66 executes the same processing as the processing at steps ST14 and ST15 shown in FIG. 7 of the foregoing embodiment 2.

As for step ST63 to step ST66, their order of executing the processing can be exchanged as long as the drawing source region and the drawing target region correspond correctly.

The processing at step ST67 executes the same processing as the processing at step ST16 shown in FIG. 7 of the foregoing embodiment 2.

At step ST68, the parameter control section 18 generates the smoothing parameters according to the prescribed type of the transition effect.

At step ST69, according to the smoothing parameters fed from the parameter control section 18, the smoothing processing section 7 performs the smoothing of the interpolated composite data 13 by the convolution given by the foregoing expression (14), and outputs the smoothed data 14. The processing carries out the smoothing of the interpolated composite data 13 only in the direction of movement.

At step ST70, the output control section 5 causes the display apparatus to display on its screen the smoothed data 14 in synchronization with the vertical synchronizing signal, and notifies the drawing timing information storage section 6 of the completion of the display.

After that, returning to step ST61, the drawing timing information storage section 6 updates the drawing time to the display apparatus, again, and repeats the processing up to step ST70 until the number of pixels moved reaches mv = L.

In this way, the image compositing apparatus can be realized which can set the image effect time freely without limiting the number of pixels moved per period of the vertical synchronizing signal to an integer only, and which can reduce the quality deterioration of the transition effect due to the periodical luminance variations in pixels that have large luminance variations between adjacent pixels in the direction of movement.

As described above, according to the embodiment 5 in accordance with the present invention, in the image compositing apparatus which has a restriction on setting the image transition time because it can move images only with an accuracy of integer pixel unit at every vertical synchronizing signal physically, it creates, when performing the decimal pixel (subpixel) movement corresponding to the numerical value expressing not only the whole number part but also the fractional part, the image data moved by the amount of the nearest whole number to which the number of pixels to be moved is rounded down and the image data moved by the amount of the nearest whole number to which it is rounded up; and combines them using the composite ratio f equal to the fractional part; thereby being able to control the image movement with an accuracy of the decimal pixel (subpixel) unit and to offer an advantage of being able to eliminate the restriction on setting the transition time.

In addition, according to the embodiment 5 in accordance with the present invention, the smoothing processing section 7 smoothes the image data by the convolution of the smoothing parameters into the image data and reduces the contrast between two adjacent pixels in the moving direction of the individual pixels, thereby offering an advantage of being able to reduce periodical large luminance variations occurring during the decimal pixel (subpixel) movement.

Furthermore, according to the embodiment 5 in accordance with the present invention, substituting the smoothed data 14 for the input of the interpolated composite data 13 offers an advantage of being able to display a high-definition image of the original image in a state where the image remains at rest before the start or after the completion of the transition effect of the image.

Moreover, according to the embodiment 5 in accordance with the present invention, it is also possible to add the output selecting section 8 as in the image compositing apparatus of FIG. 12 in the foregoing embodiment 3, which offers an advantage of being able to display a high-definition image of the original image in a state where the image remains at rest before the start or after the completion of the transition effect of the image.

Incidentally, although the embodiment 5 in accordance with the present invention reads out the image data from the image files 1a and 1b every time of the drawing, it is obvious that it can also read out the image data from the image files 1a and 1b and store them in an image buffer in advance, and read out the image data from the image buffer every time of the drawing, offering the same advantage.

EMBODIMENT 6

In the embodiment 6 in accordance with the present invention, an example will be described which performs the smoothing processing by drawing processing and compositing processing of an image using a plurality of smoothing-application image generating sections and smoothing compositing sections rather than carrying out the smoothing processing by the convolution calculation of the matrix.

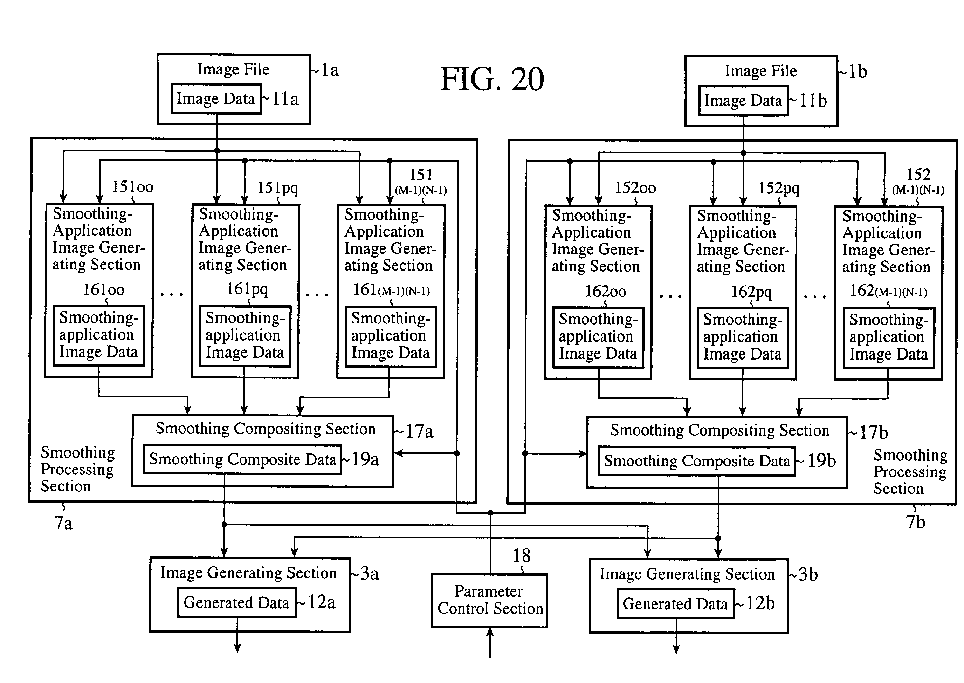

FIG. 20 is a block diagram showing a configuration of the smoothing processing sections 7a and 7b of the image compositing apparatus of the embodiment 6 in accordance with the present invention. The image compositing apparatus, which makes a transition of two images according to a designated transition effect, is assume to have the same configuration as that of FIG. 12 of the foregoing embodiment 3 including portions from the image generating sections 3a and 3b forward, except for the smoothing processing sections 7a and 7b

In FIG. 20, assume that the smoothing parameters given by the parameter control section 18 are a spatial filter composed of M × N pixel regions as in the foregoing embodiment 3, then the smoothing processing section 7a comes to have M × N smoothing-application image generating sections 151pq and a smoothing compositing section 17a. Likewise, the smoothing processing section 7b comes to have M × N smoothing-application image generating sections 152pq and a smoothing compositing section 17b. Here, it is assumed that p designates a corresponding rownumber of the smoothing filter which is the smoothingparameter, and q corresponds to a column number, where $0 \leqq p \leqq M - 1$, and $0 \leqq q \leqq N - 1$.

Next, the operation of the smoothing processing sections 7a and 7b of the image compositing apparatus will be described.

The smoothing-application image generating section 151pq receives as its input the drawing source region portion of the image data 11a in the image file 1a calculated according to the smoothing parameters from the parameter control section 18, and outputs as the drawing target region portion of the smoothing-application image data 161pq calculated according to the smoothing parameters in the same manner as the drawing source region.

The smoothing-application image generating section 152pq receives as its input the drawing source region portion of the image data 11b in the image file 1b calculated according to the smoothing parameters from the parameter control section 18, and outputs as the drawing target region portion of the smoothing-application image data 162pq calculated according to the smoothing parameters in the same manner as the drawing source region.

The smoothing compositing section 17a outputs the smoothing composite data 19a obtained by combining the smoothing-application image data 161pq according to the composite ratio calculated from the smoothing parameters.

Likewise, the smoothing compositing section 17b outputs the smoothing composite data 19b obtained by combining the smoothing-application image data 162pq according to the composite ratio calculated from the smoothing parameters.

Incidentally, as for the specifications of the display apparatus connected to the image compositing apparatus of the embodiment 6 in accordance with the present invention, and the transition effect described in the embodiment 6 in accordance with the present invention, they are assumed to be the same as those in the foregoing embodiment 2.

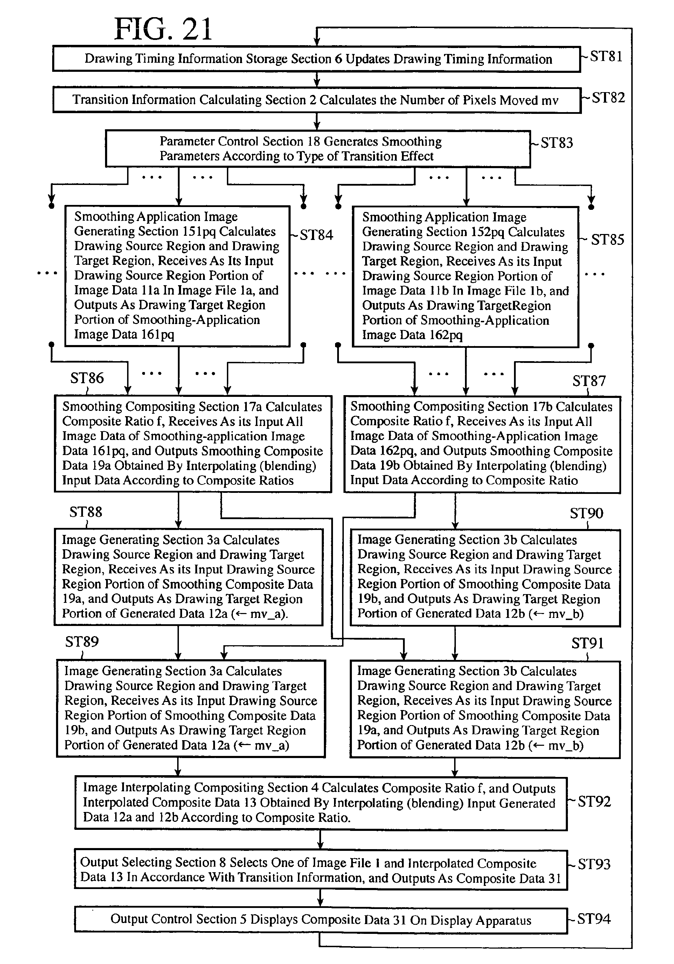

FIG. 21 is a flowchart showing a processing procedure of the image compositing apparatus of the embodiment 6 in accordance with the present invention. Referring to FIG. 21, the processing procedure of the image compositing apparatus will be described.

The processing from step ST81 to step ST83 performs the same processing as the processing from step ST21 to step ST23 shown in FIG. 13 of the foregoing embodiment 3.

At step ST81, in the same manner as in the foregoing embodiment 3, the drawing timing information storage section 6 updates the drawing timing information after the drawing at any given drawing time $t_n$ has been completed during the transition.

AtstepST82, the transition information calculating section 2 acquires the drawing timing information from the drawing timing information storage section 6 in the same manner as in the foregoing embodiment 3, and calculates the number of pixels moved mv at the next drawing.

At step ST83, the parameter control section 18 acquires the type of the transition effect and the number of pixels moved from the transition information calculating section 2 and generates the smoothing parameters in the same manner as in the foregoing embodiment 3.

At step ST84, the smoothing-application image generating section 151pq obtains the drawing source region and drawing target region of the image data 11a in the image file 1a at the time when the image data 11a in the image file 1a is moved by the number of pixels ((p - floor(M/2)) pixels in the horizontal direction and (q - floor (N/2)) pixels in the vertical direction) according to the smoothing parameters acquired from the parameter control section 18; acquires the drawing source region portion of the image data 11a; and outputs as the drawing target region portion of the smoothing-application image data 161pq. The processing is performed for each of all the combinations of (p, q) (M $\times$ N combinations).

At step ST85, the smoothing-application image generating section 152pq obtains the drawing source region and drawing target region of the image data 11b in the image file 1b at the time when the image data 11b in the image file 1b is moved by the number of pixels ((p - floor(M/2)) pixels in the horizontal direction and (q - floor(N/2)) according to the smoothing parameters acquired from the parameter control section 18 pixels in the vertical direction); acquires the drawing source region portion of the image data 11b; and outputs as the drawing target region portion of the smoothing-application image data 162pq. The processing is performed for each of all the combinations of (p, q) (M $\times$ N combinations).

As for step ST84 and step ST85 including the corresponding steps, which are not shown in the drawing depending on the values of p and q, their order of executing the processing can be exchanged as long as the respective drawing source regions and drawing target regions correspond correctly.

For example, when the smoothing parameters are given by a $3 \times 1$ matrix, there is no movement in the vertical direction as will be described below, and the smoothing-application image data 161pq and 162pq are output which have a reference range moved by -1 pixel, 0 pixel and +1 pixel in the horizontal direction only.

The smoothing-application image generating section 15100 acquires the image data 11a from the image file 1a, and outputs the smoothing-application image data 16100 moved by one pixel to the left. The smoothing-application image generating section 15110 acquires the image data 11a from the image file 1a, and outputs the smoothing-application image data 16110 as it is. The smoothing-application image generating section 15120 acquires the image data 11a from the image file 1a, and outputs the smoothing-application image data 16120 moved by one pixel to the right.

Likewise, the smoothing-application image generating section 15200 acquires the image data 11b from the image file 1b, and outputs the smoothing-application image data 16200 moved by one pixel to the left. The smoothing-application image generating section 15210 acquires the image data 11b from the image file 1b, and outputs the smoothing-application image data 16210 as it is. The smoothing-application image generating section 15220 acquires the image data 11b from the image file 1b, and outputs the smoothing-application image data 16220 moved by one pixel to the right.

At step ST86, using component values A(p, q) corresponding to the numbers of pixels moved, by the amount of which the smoothing-application image data 161pq are moved from the original image, as composite ratios, the smoothing compositing section 17a blends all the smoothing-application image data 161pq, and writes into the smoothing composite data 19a. The processing smoothes the image data 11a in the image file 1a in the direction of movement only.

The composite ratio $f_{1pq}$ of the smoothing-application image data 161pq can be obtained by $f_{1pq} = A(p, q)$ so that the output smoothing composite data 19a is given by the following expression (16).

$$I_1(x, y) = \sum_{(i,j)\in S} \{f_{1ij} \cdot I_{1ij}(x, y)\} \qquad (16)$$

where $I_1(x, y)$ denotes the luminance value at the point $(x, y)$ of the smoothing composite data 19a, and $I_{1ij}(x, y)$ designates the luminance value at the point $(x, y)$ of the smoothing-application image data 161ij. In addition, S is assumed to satisfy the following expression (17).

$$\texttt{-floor(M/2)} \leqq \texttt{i} \leqq \texttt{(M/2)}$$

$$\texttt{and}$$

$$\texttt{-floor(N/2)} \leqq \texttt{j} \leqq \texttt{(N/2)} \qquad (17)$$

At step ST87, using the component values A(p, q) corresponding to the numbers of pixels moved, by the amount of which the smoothing-application image data 162pq are moved from the original image, as composite ratios, the smoothing compositing section 17b blends all the smoothing-application image data 162pq, and writes into the smoothing composite data 19b. The processing smoothes the image data 11b in the image file 1b in the direction of movement only.

The composite ratio $f_{2pq}$ of the smoothing-application image data 162pq can be obtained by $f_{2pq} = A(p, q)$ so that the output smoothing composite data 19b is given by the following expression (18).

$$I_2(x, y) = \sum_{(i,j)\in S} \{f_{2ij} \cdot I_{2ij}(x, y)\} \qquad (18)$$

where $I_2(x, y)$ denotes the luminance value at the point $(x, y)$ of the smoothing composite data 19b, and $I_{2ij}(x, y)$ designates the luminance value at the point $(x, y)$ of the smoothing-application image data 162ij. In addition, S is assumed to satisfy the foregoing expression (17).

The processing from step ST88 to step ST91 corresponds to the processing in which the inputs to the image generating sections 3a and 3b, which are output from the smoothing processing sections 7a and 7b, are changed from the smoothed data 14a and 14b from step ST26 to step ST29 in FIG. 13 of the foregoing embodiment 3 to the smoothing composite data 19a and 19b. As for the four steps, their order of executing the processing can be exchanged as long as the drawing source region and the drawing target region correspond correctly.

At step ST88, the image generating section 3a obtains the drawing source region a of the smoothing composite data 19a and the drawing target region a of the generated data 12a at the time when the number of pixels moved mv_ a in the image generating section 3a is floor (mv) from the number of pixels moved mv provided by the transition information calculating section 2 and from the region computing formula information for obtaining the drawing source region and drawing target region of each image data; acquires the drawing source region a portion of the smoothing composite data 19a as the input; and outputs as the drawing target region a portion of the generated data 12a.

At step ST89, the image generating section 3a obtains the drawing source region b of the smoothing composite data 19b and the drawing target region b of the generated data 12a at the time when the number of pixels moved mv_ a in the image generating section 3a is floor (mv) from the number of pixels moved mv provided by the transition information calculating section 2 and from the region computing formula information for obtaining the drawing source region and drawing target region of each image data; acquires the drawing source region bportion of the smoothing composite data 19b as the input; and outputs as the drawing target region b portion of the generated data 12a.

At step ST90, the image generating section 3b obtains the drawing source region b of the smoothing composite data 19b and the drawing target region b of the generated data 12b at the time when the number of pixels moved mv_ b in the image generating section 3b is ceil (mv) from the number of pixels moved mv provided by the transition information calculating section 2 and from the region computing formula information for obtaining the drawing source region and drawing target region of each image data; acquires the drawing source region aportion of the smoothing composite data 19a as the input; and outputs as the drawing target region a portion of the generated data 12b.

At step ST91, the image generating section 3b obtains the drawing source region a of the smoothing composite data 19a and the drawing target region a of the generated data 12b at the time when the number of pixels moved mv_ b in the image generating section 3b is ceil (mv) from the number of pixels moved mv provided by the transition information calculating section 2 and from the region computing formula information for obtaining the drawing source region and drawing target region of each image data; acquires the drawing source region a portion of the smoothing composite data 19a as the input; and outputs as the drawing target region a portion of the generated data 12b.

The processing from step ST92 to step ST94 performs the same processing as the processing from step ST30 to step ST32 shown in FIG. 13 of the foregoing embodiment 3.

In this way, the image compositing apparatus can be realized which can set the image effect time freely without limiting the number of pixels moved per period of the vertical synchronizing signal to an integer only, and which can reduce the quality deterioration due to the periodical luminance variations in pixels that have large luminance variations between adjacent pixels in the direction of movement.

As described above, according to the embodiment 6 in accordance with the present invention, in the image compositing apparatus which has a restriction on setting the image transition time because it can move images only with an accuracy of integer pixel unit at every vertical synchronizing signal physically, it creates, when performing the decimal pixel (subpixel) movement corresponding to the numerical value expressing not only the whole number part but also the fractional part, the image data moved by the amount of the nearest whole number to which the number of pixels to be moved is rounded down and the image data moved by the amount of the nearest whole number to which it is rounded up; and combines them using the composite ratio f equal to the fractional part; thereby being able to control the image movement with an accuracy of the decimal pixel (subpixel) unit and to offer an advantage of being able to eliminate the restriction on setting the transition time.

In addition, according to the embodiment 6 in accordance with the present invention, the smoothing processing sections 7a and 7b receive as their inputs the drawing source regionportions of the image data 11a and 11b in the image files 1a and 1b calculated according to the smoothing parameters; output them as the drawing target region portions of the smoothing-application image data 161pq and 162pq calculated according to the smoothing parameters; output the smoothing composite data 19a and 19b obtained by combining the smoothing-application image data 161pq and 162pq according to the composite ratios f calculated from the smoothing parameters to smooth the image data and reduce the contrast between two adjacent pixels in the moving direction of the individual pixels, thereby offering an advantage of being able to reduce periodical large luminance variations occurring during the decimal pixel (subpixel) movement.

Furthermore, according to the embodiment 6 in accordance with the present invention, the output selecting section 8 can be added to the image compositing section 30 of FIG. 20 in the same manner as in the image compositing apparatus of FIG. 12 of the foregoing embodiment 3. This offers an advantage of being able to display a high-definition image of the original image in a state where the image remains at rest before the start or after the completion of the transition effect of the image.

Incidentally, although the embodiment 6 in accordance with the present invention replaces the internal configurations of the smoothing processing sections 7a and 7b in the foregoing embodiment 3, it is also possible to replace the internal configurations of the smoothing processing sections 7a and 7b in the foregoing embodiment 4 or 5, offering the same advantages.

In addition, although in the embodiment 6 in accordance with the present invention, the image data 11a and 11b are read out of the image files 1a and 1b at every drawing, it is obvious that it can also read out the image data 11a and 11b from the image files 1a and 1b and store them in an image buffer in advance, and read out the image data 11a and 11b from the image buffer every time of the drawing, offering the same advantage.

Furthermore, the embodiment 6 in accordance with the present invention can, if the smoothing parameters are fixed, not only present the same advantage by acquiring the image data 11a and 11b from the image files 1a and 1b in advance, by storing the smoothing composite data 19a and 19b smoothed by the smoothing processing sections 7a and 7b in a buffer, and by reading the smoothing composite data 19a and 19b out of the buffer every time of the drawing, but also reduce the processing at the time of drawing because it is necessary to perform the smoothing processing only once at the start of the transition.

EMBODIMENT 7

In the embodiment 7 in accordance with the present invention, the image compositing apparatus will be described which realizes the image generating sections, the image interpolating compositing section and the smoothing processing section in the foregoing embodiment 3 to the foregoing embodiment 6 by using only image generating sections and an image interpolating compositing section, and by using only the drawing processing and compositing processing at a time.

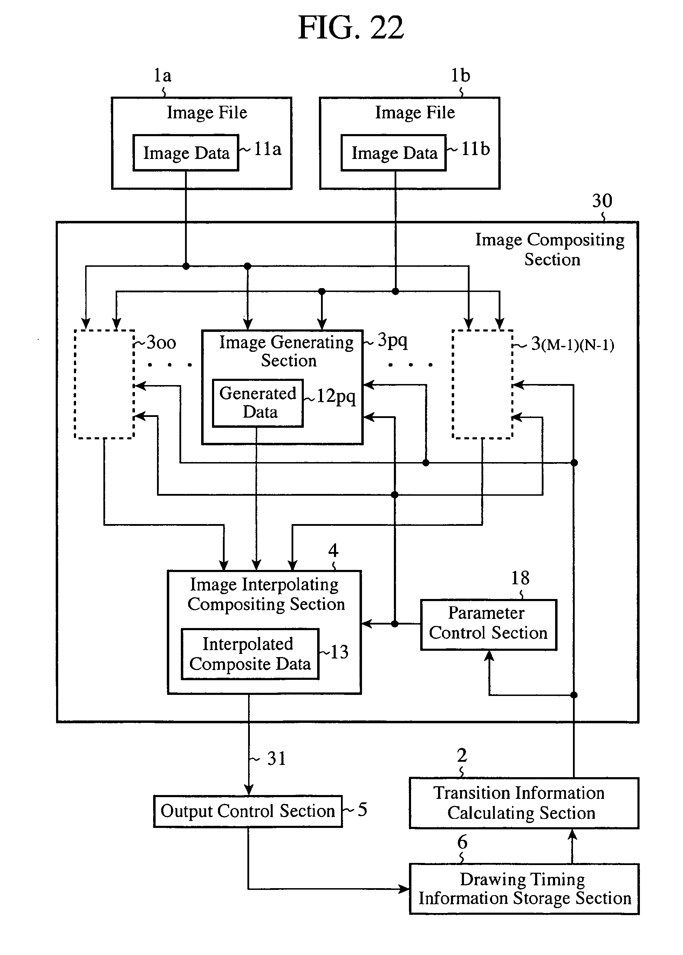

FIG. 22 is a block diagram showing a configuration of the image compositing apparatus of the embodiment 7 in accordance with the present invention. The image compositing apparatus, which makes a transition of two images by the designated transition effect, comprises the image files 1a and 1b, the transition information calculating section 2, image generating sections 3pq, the image interpolating compositing section 4, the output control section 5, the drawing timing information storage section 6 and the parameter control section 18; in which the configuration block including the image generating sections 3pq, image interpolating compositing section 4 and parameter control section 18 constitutes the image compositing section 30. Incidentally, in FIG. 22, the same reference numerals as those of the foregoing embodiment 1 to the foregoing embodiment 4 designate the same or like sections.

In FIG. 22, the configuration differs from that of FIG. 4 in the foregoing embodiment 2 in that concerning the interpolated composite data 13 of the image interpolating compositing section 4 of the foregoing embodiment 2, which is made the composite data output from the image compositing section 30, the image interpolating compositing section 4 is configured in such a manner as execute the smoothing processing and the interpolating compositing processing all together by acquiring the smoothing parameters fed from the parameter control section 18 to output the interpolated composite data 13 having undergone the processing.

Next, the operation of the image compositing apparatus will be described.

In FIG. 22, the image generating section 3pq receives as its input the drawing source region portion of the image data 11a in the image file 1a, which is calculated from the transition information fed from the transition information calculating section 2 and the smoothing parameters fed from the parameter control section 18, and outputs as the drawing target region portion of the generated data 12pq, which is calculated from the transition information and the smoothing parameters in the same manner as the drawing source region; and likewise receives as its input the drawing source region portion of the image data 11b in the image file 1b, which is calculated from the transition information and the smoothing parameters, and outputs as the drawing target region portion of the generated data 12pq, which is calculated from the transition information and the smoothing parameters in the same manner as the drawing source region. As for the generated data 12pq, when the image generating section 3pq can include a buffer, it outputs it after reading out the image data 11a and 11b and generating and storing it; and unless it can include the buffer, it outputs it while reading out and generating successively. It is assumed here that p designates a corresponding row number of the smoothing filter which is the smoothing parameter, and q corresponds to a column number, where $0 \leq p \leq M$, and $0 \leq q \leq N - 1$. Although the transition effect moving in the horizontal direction is supposed here, when the transition effect moving in the vertical direction is used, they become $0 \leq p \leq M-1$ and $0 \leq q \leq N$.

The image interpolating compositing section 4 combines the generated data 12pq according to the composite ratios calculated from the transition information fed from the transition information calculating section 2 and the smoothing parameters fed from the parameter control section 18, and outputs the interpolated composite data 13. The parameter control section 18 generates the smoothing parameters according to the type of the transition effect fed from the transition information calculating section 2, and supplies the smoothing parameters generated to the image generating sections 3pq and the image interpolating compositing section 4. As for the remaining portions, the image files 1a and 1b, transition information calculating section 2, output control section 5 and drawing timing information storage section 6, they have the same configurations as those shown in FIG. 16 of the foregoing embodiment 4.

Next, the operation will be described.

Here, as for the specifications of the display apparatus connected to the image compositing apparatus of the embodiment 7 in accordance with the present invention, and the transition effect described in the embodiment 7 in accordance with the present invention, they are assumed to be the same as their counterparts of the foregoing embodiment 2. In addition, the smoothing parameters formed by the parameter control section 18 in the embodiment 7 in accordance with the present invention are assumed to be an $M \times N$ filter.

Furthermore, as for the image compositing apparatus of the embodiment 7 in accordance with the present invention, it includes $(M + 1) \times N$ image generating sections 3pq because the transition effect has the image movement effect in the horizontal direction as in the foregoing embodiment 3. In contrast, in the case of the image movement effect in the vertical direction, it includes $M \times (N + 1)$ image generating sections.

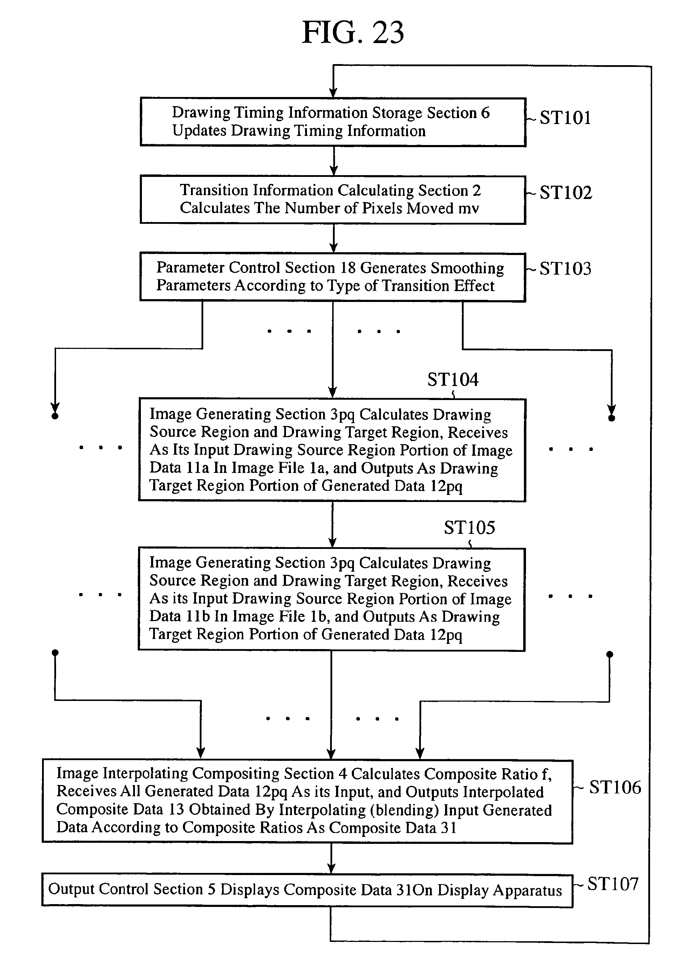

FIG. 23 is a flowchart showing a processing procedure of the image compositing apparatus of the embodiment 7 in accordance with the present invention.

The processing from step ST101 to step ST103 performs the same processing as the processing from step ST41 to step ST43 shown in FIG. 17 of the foregoing embodiment 4.

At step ST101, after completing the drawing at any given drawing time $t_n$ during the transition, the drawing timing information storage section 6 updates the drawing timing information in the same manner as the foregoing embodiment 4.

At step ST102, in the same manner as in the foregoing embodiment 4, the transition information calculating section 2 acquires the drawing timing information from the drawing timing information storage section 6, and calculates the number of pixels moved mv at the point of drawing.

At step ST103, in the same manner as in the foregoing embodiment 4, the parameter control section 18 acquires the type of the transition effect and the number of pixels moved from the transition information calculating section 2, and obtains the smoothing parameters.

At step ST104, according to the number of pixels moved mv fed from the transition information calculating section 2, the image generating section 3pq obtains each drawing source region of the image file 1a and the drawing target region of the generated data 12pq when the number of pixels moved of the transition effect is shifted by floor (mv) - floor (M/2) + p pixels in the horizontal direction and by q - floor (N/2) pixels in the vertical direction; acquires as its input the drawing source region portion of the image data 11a in the image file 1a; and outputs as the drawing target region portion of the generated data 12pq.

At step ST105, according to the number of pixels moved mv fed from the transition information calculating section 2, the image generating section 3pq obtains each drawing source region of the image file 1b and the drawing target region of the generated data 12pq when the number of pixels moved of the transition effect is shifted by floor (mv) - floor (M/2) + p pixels in the horizontal direction and by q - floor (N/2) pixels in the vertical direction; acquires as its input the drawing source region portion of the image data 11b in the image file 1b; and outputs as the drawing target region portion of the generated data 12pq.

As for these step ST104 and step ST105 including the corresponding steps not shown in the drawing depending on the values of p and q, their order of executing the processing can be exchanged as long as the respective drawing source regions and drawing target regions correspond correctly.

At step ST106, using the composite ratios fpq of the individual generated data 12pq calculated from the number of pixels moved mv fed from the transition information calculating section 2 and the smoothing parameters fed from the parameter control section 18, the image interpolating compositing section 4 blends the individual generated data 12pq and writes into the interpolated composite data 13.

Incidentally, the composite ratios $f_{pq}$ for the generated data 12pq can be obtained by the following expression (19).

$$
\begin{aligned}
f_{0q} &= A(-floor(M/2),\ q - N/2)\cdot(1 - f) \\
f_{1q} &= (A(1 - floor(M/2),\ q - N/2)\cdot(1 - f) \\
&\quad + A(-floor(M/2),\ q - N/2)\cdot f \\
&\ \cdots \\
f_{(M-1)q} &= A(M-1 - floor(M/2),\ q - N/2)\cdot(1 - f) \\
&\quad + A(M-2-floor(M/2),\ q - N/2)\cdot f \\
f_{Mq} &= A(M-1 - floor(M/2),\ q - N/2)\cdot f
\end{aligned}
$$

$$(19)$$

where the composite ratio f is equal to that used in the foregoing expression (3).

As an example, a case where the smoothing parameters are given by a $3 \times 1$ matrix will be described. According to the number of pixels moved mv fed from the transition information calculating section 2, the image generating section 300 obtains the individual drawing source regions and drawing target regions of the image files 1a and 1b when the number of pixels moved is floor(mv) - 1; receives as its input the individual drawing source region portions; and outputs as the drawing target region portion of the generated data 1200. Incidentally, since the movement in the vertical direction is N = 1 or 0 pixel, the calculating method is the same as that of the foregoing embodiment 2.

Likewise, according to the number of pixels moved mv fed from the transition information calculating section 2, the image generating section 310 obtains the individual drawing source regions and drawing target regions of the image files 1a and 1b when the number of pixels moved is floor(mv); receives as its input the individual drawing source region portions; and outputs as the drawing target region portion of the generated data 1210.

Similarly, according to the number of pixels moved mv fed from the transition information calculating section 2, the image generating section 320 obtains the individual drawing source regions and drawing target regions of the image files 1a and 1b when the number of pixels moved is floor(mv) + 1; receives as its input the individual drawing source region portions; and outputs as the drawing target region portion of the generated data 1220.

Likewise, according to the number of pixels moved mv fed from the transition information calculating section 2, the image generating section 330 obtains the individual drawing source regions and drawing target regions of the image files 1a and 1b when the number of pixels moved is floor(mv) + 2; receives as its input the individual drawing source region portions; and outputs as the drawing target region portion of the generated data 1230.

The image interpolating compositing section 4 calculates the composite ratios $f_{00}$, $f_{10}$, $f_{20}$ and $f_{30}$ of the generated data 1200, 1210, 1220 and 1230 from the number of pixels moved mv fed from the transition information calculating section 2 and from the smoothing parameters fed from the parameter control section 18 according to the following expression (20).

$$f_{00} = A(-1, 0) \cdot (1 - f)$$

$$f_{10} = A(0, 0) \cdot (1 - f) + A(-1, 0) \cdot f$$

$$f_{20} = A(1, 0) \cdot A(1 - f) + A(0, 0) \cdot f$$

$$f_{30} = A(1, 0) \cdot f$$

$$f = mv - floor(mv) \qquad\qquad (20)$$

The image interpolating compositing section 4 combines the generated data 1200, 1210, 1220 and 1230 according to the following expression (21), and outputs as the interpolated composite data 13.

$$I'(x, y) = f_{00} \cdot I_{00}(x, y) + f_{10} \cdot I_{10}(x, y)$$
$$+ f_{20} \cdot I_{20}(x, y) + f_{30} \cdot I_{30}(x, y) \qquad (21)$$

where $I_{pq}(x, y)$ denotes the luminance value at the coordinates of the input generated data 12qp, and I' (x, y) denotes the luminance value at the coordinates of the output image interpolated composite data 13.

At step ST107, the output control section 5 causes the display apparatus to display on its screen the interpolated composite data 13 in synchronization with the vertical synchronizing signal.

After that, returning to step ST101, the drawing timing information storage section 6 updates the drawing time to the display apparatus, again, and repeats the processing at step ST107 until the number of pixels moved reaches mv = L.

In this way, the image compositing apparatus can be realized which can set the image effect time freely without limiting the number of pixels moved per period of the vertical synchronizing signal to an integer only, and which can reduce the quality deterioration due to the periodical luminance variations in pixels that have large luminance variations between adjacent pixels in the direction of movement.

As described above, according to the embodiment 7 in accordance with the present invention, in the same manner as the foregoing embodiment 3 to the foregoing embodiment 6, in the image compositing apparatus which has a restriction on setting the image transition time because it can move images only with an accuracy of integer pixel unit at every vertical synchronizing signal physically, it creates, when performing the decimal pixel (subpixel) movement, the image data moved by the amount of the nearest whole number to which the number of pixels to be moved is rounded down, the image data moved by the amount of the nearest whole number to which it is rounded up, and a plurality of image data obtained by moving them up and down, left and right; and combines them in accordance with the coefficients of the smoothing filter which are the smoothing parameters corresponding to the individual image data and in accordance with the composite ratios which are the transition information and are the fractional part of the number of pixels moved, in order to carry out the movement with an accuracy of the decimal pixel (subpixel) unit and the averaging processing at the same time; thereby being able to offer an advantage of being able to eliminate the restriction on setting the transition time, and to reduce the periodical large luminance variations at the decimal pixel (subpixel) movement by diminishing the contrast by smoothing the image data.

In addition, according to the embodiment 7 in accordance with the present invention, the output selecting section 8 can be added to the image compositing section 30 of FIG. 22 in the same manner as in the image compositing apparatus of FIG. 12 of the foregoing embodiment 3. This offers an advantage of being able to display a high-definition image of the original image in a state where the image remains at rest before the start or after the completion of the transition effect of the image.

Incidentally, although in the embodiment 7 in accordance with the present invention, the image data 11a and 11b are read out of the image files 1a and 1b at every drawing, it is obvious that it can also read out the image data 11a and 11b from the image files 1a and 1b and store them in an image buffer in advance, and read out the image data 11a and 11b from the image buffer every time of the drawing, offering the same advantage.

In addition, as for the generated data, interpolated composite data, smoothed data, smoothing-application image data, and smoothing composite data in the foregoing embodiment 1 to the foregoing embodiment 7, it is obvious that the image generating sections, image interpolating compositing section, smoothing processing section, smoothing-application image generating sections, and smoothing compositing section can each include a buffer for storing them, and output them by reading from the buffers, or can output them while successively processing the input data without including any buffers, offering the same advantage.

Furthermore, although in the foregoing embodiment 2 to the foregoing embodiment 7, the image generating sections 3a and 3b and the image interpolating compositing section 4 calculates the individual drawing source regions, individual drawing target regions and composite ratios, it is obvious that the same advantage can be gained by calculating the individual drawing source regions, individual drawing target regions and composite ratios by the transition information calculating section 2, and by supplying the image generating sections 3a and 3b and image interpolating compositing section 4 with the number of pixels moved or with the individual drawing source regions, individual drawing target regions and composite ratios which are necessary for them.

In addition, in the foregoing embodiment 3 to the foregoing embodiment 7, although the parameter control section 18 decides the direction to which the smoothing is applied according to the type of the transition effect only, it is also possible to alter the smoothing parameters every time of the drawing according to the changes in the number of pixels moved in such a manner as to increase the degree of the smoothing when the changes are large, and to reduce it when the changes are small, thereby being able to further increase its effect.

Furthermore, in the foregoing embodiment 3 to the foregoing embodiment 5, although the smoothing processing section uses the same smoothing parameters within an image, it is obvious that the image quality during the transition effect can be further improved by using different smoothing parameters for individual pixels by adjusting the smoothing parameters in such a manner as to reduce the degree of the smoothing about the pixels having in the input image data such small luminance differences as not requiring the smoothing with the surrounding pixels.

In addition, in the foregoing embodiment 3 to the foregoing embodiment 6, although the individual processing sections, that is, the smoothing processing sections, image generating sections and the image interpolating compositing section are placed separately, it is obvious that the same advantage can be gained by carrying out calculation of all or part of the smoothing processing section 7, image generating sections 3a and 3b and image interpolating compositing section 4 collectively at a time, and by outputting the results to the output control section 5.

The all-collective calculation in the individual embodiments results in the following expression (22).

$$I'(x, y) = (1 - f) \cdot \sum_{(i,j) \in S} A(i, j) \cdot I(x + floor(mv) + i, y + j, c) + f \cdot \sum_{(i,j) \in S} A(i, j) \cdot I(x + ceil(mv) + i, y + j, c)$$

$$(2\ 2)$$

It is obvious from the expression that the image compositing apparatuses from the foregoing embodiment 3 to the foregoing embodiment 7 can all gain the same advantage in spite of their different processing procedures.

Furthermore, in the foregoing embodiment 3, although a description is made that the transition effect storage section 10 can be included in the transition information calculating section 2, it is obvious that as another configuration the transition effect storage section 10 can provide the transition effect information directly to the individual processing sections without passing through the transition information calculating section 2, offering the same advantage.

In addition, in the foregoing embodiment 1 and the foregoing embodiment 2, although the image compositing apparatuses without the transition effect storage section 10 and drawing timing information storage section 6 are described, it is obvious that if they have the drawing timing information storage section 6 as in the foregoing embodiment 3 to the foregoing embodiment 7, they can prevent the drawing f rom being affected by the previous drawing contents, and hence perform the display as scheduled even if the drawing has not been completed within one period of the vertical synchronizing signal and waits for the next vertical synchronizing signal, thereby being able to realize the image compositing apparatus capable of completing the transition effect within the transition time.

Furthermore, in the foregoing embodiment 1 and the foregoing embodiment 2, it is obvious that if they have the transition effect storage section 10 as in the foregoing embodiment 3 to the foregoing embodiment 7, they can realize the image compositing apparatus capable of performing different transition effect at every image transition. Besides, in the foregoing embodiment 1 and the foregoing embodiment 2, even when they have the drawing timing information storage section 6, it is obvious that they can realize the image compositing apparatus in the same manner as the foregoing embodiment 3 to the foregoing embodiment 7.

In addition, although the scrolling of two pieces of images is described as one of the transition effects in the foregoing embodiment 2 to the foregoing embodiment 6, there are slide-in, slide-out and the like as other general effects in which the positions of the display rectangles vary. Besides, as for a transition effect other than those described above, the transition effect that produces movement at every decimal pixel (subpixel) can be realized by obtaining with the image generating sections 3a and 3b the drawing source regions and drawing target regions corresponding to the transition effect for the individual image data.

Furthermore, when the amount of displacement of the number of pixels moved differ from image to image, the parameter control section 18 can realize, in the foregoing embodiment 4 and the foregoing embodiment 5, the transition effect in which the numbers of pixels moved differ for the individual image data 11a and 11b in the image files 1a and 1b by assigning, in the smoothing processing sections 7a and 7b, different smoothing parameters of the smoothing processing sections 7a and 7b to each region having the same amount of displacement in the number of pixels moved. Besides, in the foregoing embodiment 3, assigning different smoothing parameters to each of the image files 1a and 1b to which the smoothing processing sections 7a and 7b apply smoothing makes it possible to realize the transition effect having different number of pixels moved for each of the image data 11a and 11b in the image files 1a and 1b.

For example, in the case of slide-in, the image data 11a does not move, but the image data 11b comes into the screen of the display apparatus in the same manner as the scroll. In this case, the parameter control section 18 sets the smoothing parameters in the individual pixels in such a manner as to smooth only the pixels into which the image data 11b is drawn in the direction of movement by calculating the individual drawing target regions of the image data 11a and 11b from the transition information fed from the transition information calculating section 2, or by acquiring the individual drawing target regions from the transition information calculating section; and the smoothing processing sections 7a and 7b perform the processing according to the smoothing parameters; thereby being able to realize the transition effect capable of movement with every decimal pixel (subpixel) unit in the slide-in.

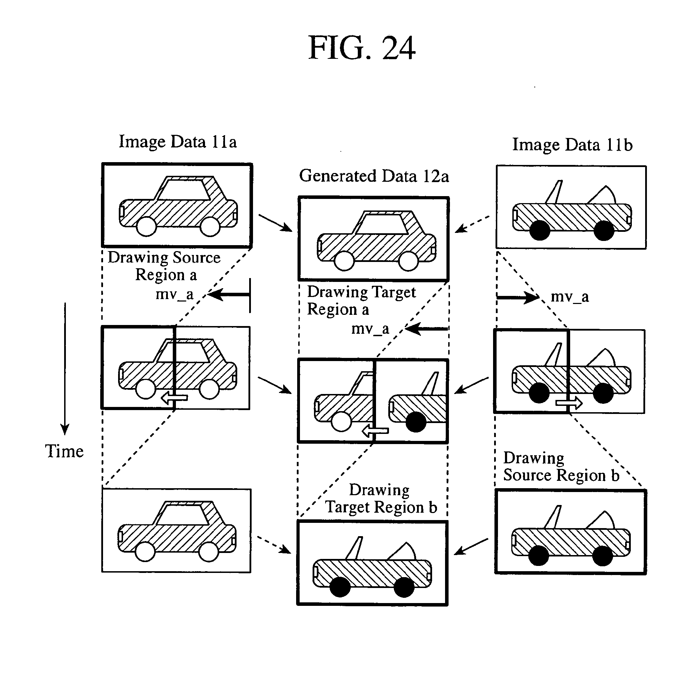

FIG. 24 is a diagram showing changes in the screen in the slide-in effect by which the image data 11b slides into the image data 11a from right to left. The term "slide-in" refers to the effect by which the image to be displayed next seems to be introduced onto the image displayed previously. Here, as in the example of the scrolling in the foregoing embodiment 2, the resolutions of the image data 11a, image data 11b and display apparatus are assumed to be all the same in 320 × 48. For example, when carrying out slide-in from right to left at a transition, the drawing source region of the image data 11a at the start of the transition start is (0, 0) - (320, 48), and there is no drawing source region of the image data 11b However, as the transition proceeds, the drawing source region of the image data 11a changes to (0, 0) - (320 - n, 48), and the drawing source region of the image data 11b changes to (0, 0) - (n, 48). In this case, the drawing target region of the image data 11a becomes (0, 0) - (320 - n, 48), and the drawing target region of the image data 11b becomes (320 - n, 0) - (320, 48) . Then, the operation is repeated until the drawing target region and the area of drawing target region of the image data 11a become zero. In this way, the image data 11b seems to be introduced onto the image data 11a newly.

In the case of slide-out, a similar effect can be realized by smoothing only the region in which the image data 11a is drawn conversely.

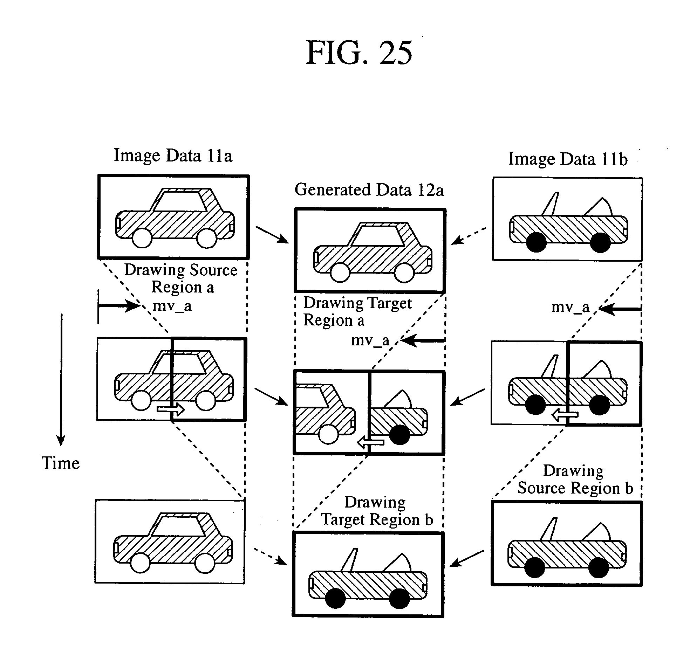

FIG. 25 is a diagram showing changes in the screen in the slide-out effect by which the slide-out is carried out from the image data 11a to the image data 11b from right to left. The term "slide-out" refers to the effect by which the image displayed previously seems to be pulled out in any given direction, and the image to be displayed next seems to appear from under that. Here, as in the example of the scrolling in the foregoing embodiment 2, the resolutions of the image data 11a, image data 11b and display apparatus are assumed to be all the same in 320 × 48. For example, when carrying out slide-out from right to left at a transition, the drawing source region of the image data 11a at the start of the transition start is (0, 0) - (320, 48), and there is no drawing source region of the image data 11b. However, as the transition proceeds, the drawing source region of the image data 11a changes to (n, 0) - (320, 48), and the drawing source region of the image data 11b changes to (320 - n, 0) - (320, 48). In this case, the drawing target region of the image data 11a becomes (0, 0) - - (320 - n, 48), and the drawing target region of the image data 11b becomes (320 - n, 0) - (320, 48). Then, the operation is repeated until the drawing target region and the area of drawing target region of the image data 11a become zero. In this way, it seems that the image data 11a is pulled out of the screen, and the image data 11b appears from under that.

Incidentally, in the case of wiping effect, since the positions of both the image data 11a and 11b do not move, the luminance variations involved in the image movement do not occur. Accordingly, the image compositing apparatus in the foregoing embodiment 2 can realize the transition effect that enables movement at every decimal pixel (subpixel) without anyperiodical luminance variations by its configuration only.

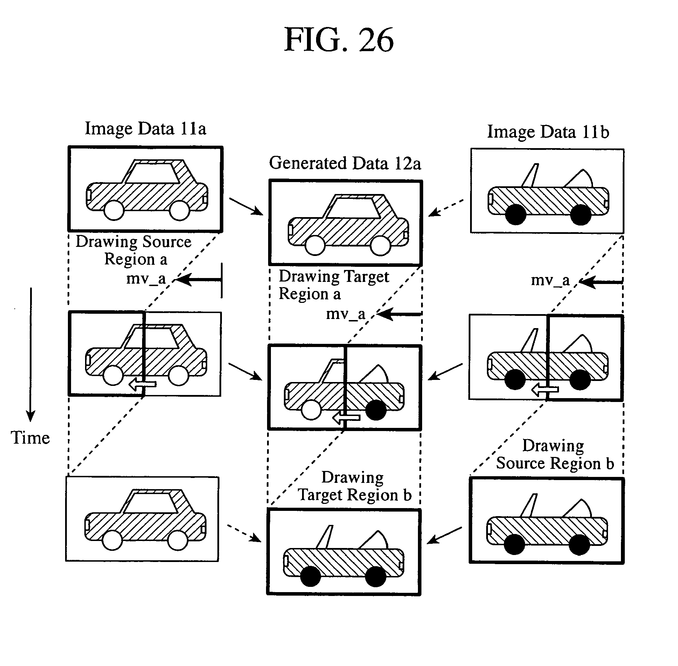

FIG. 26 is a diagram showing changes in the screen in the wiping effect by which the image data 11a is wiped out by the image data 11b from right to left. The term "wiping" refers to the effect by which the image displayed previously seems to be repainted successively by the image to be displayed next. Here, as in the example of the scrolling in the foregoing embodiment 2, the resolutions of the image data 11a, image data 11b and display apparatus are assumed to be all the same in $320 \times 48$. For example, when carrying out wiping from right to left at a transition, the drawing source region of the image data 11a at the start of the transition start is (0, 0) - (320, 48), and there is no drawing source region of the image data 11b. However, as the transition proceeds, the drawing source region of the image data 11a changes to (0, 0) - (320 - n, 48), and the drawing source region of the image data 11b changes to (320 - n, 0) - (320, 48). In this case, the drawing target region of the image data 11a becomes (0, 0) - - (320 - n, 48), and the drawing target region of the image data 11b becomes (320 - n, 0) - (320, 48). Then, the operation is repeated until the drawing target region and the area of drawing target region of the image data 11a become zero. In this way, the image data 11a seems to be repainted by the image data 11b gradually. Incidentally, in the case of wiping, the number of pixels moved, which is the transition information indicating the transitionprogress, denotes the number of columns repainted by the image data 11b.

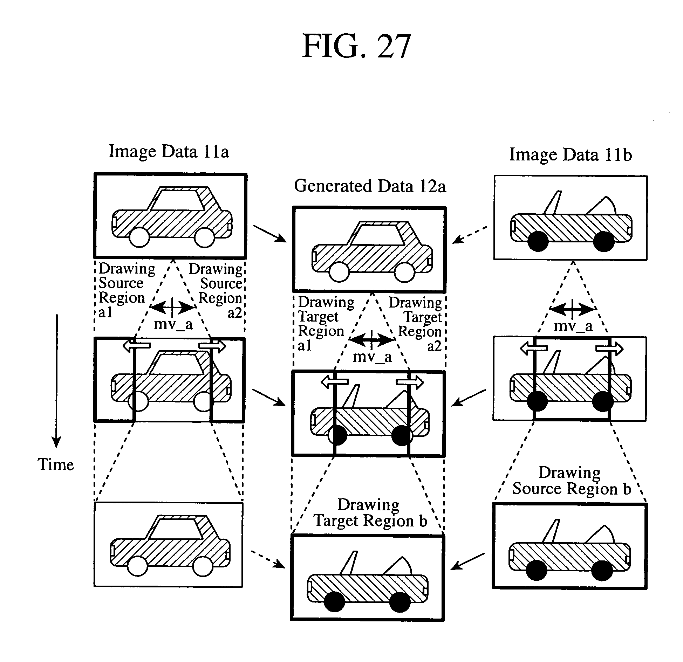

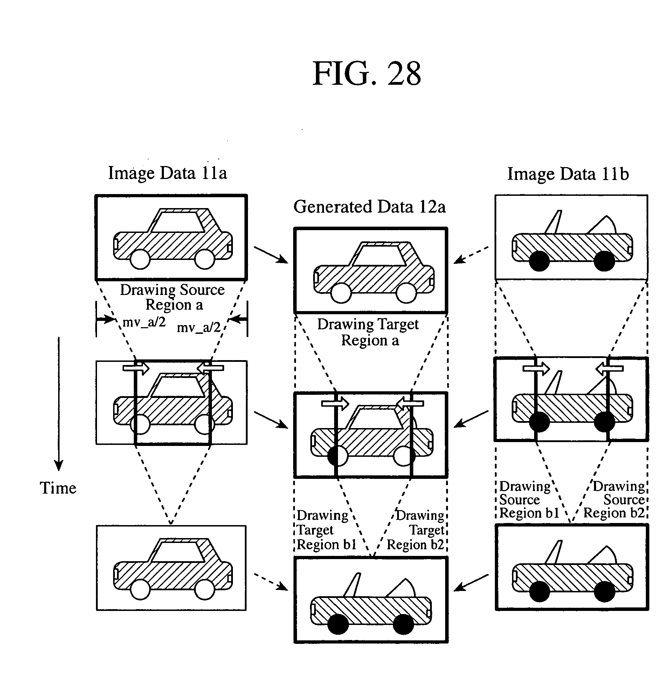

In addition, in the wiping effect, composite variations such as those shown in FIG. 27 and FIG. 28 can be realized easily: in FIG. 27, a start point is set within the image and the repainting of the image is performed toward the right and left; and in FIG. 28, start points are set at the right and left edges and the repainting is carried out toward the inside. Incidentally, although FIG. 27 shows an example that performs the repainting from the internal start point to the right and left at the rate of the number of pixels moved mv_a/2, it is not necessary to be symmetrical. For example, it is also possible to move the repainting toward right and left from the start point at different numbers of pixels moved or composite ratios, and to complete the repainting in that direction when it reaches the right or left edge. Likewise, although FIG. 28 shows an example that performs the repainting from the right and left edges toward the inside at the rate of the number of pixels moved mv_a/2, respectively, it is not necessary to be symmetrical. For example, it is also possible to move the repainting toward an end point, at which the repainting from the two edges toward the right and left crosses, at different numbers of pixels moved or composite ratios, and to complete the repainting when it crosses at the internal end point. Likewise, composite variations such as combining images, which are divided right and left at an internal end point, at the end point by performing slide-in, and such as separating an image to the right and left from an internal start point to make them slide-out, can be easily realized based on the idea of carrying out two types of composition in two directions from the internal start point or end point to the right and left at different numbers of pixels moved or composite ratios.

Furthermore, although the foregoing embodiment 2 to the foregoing embodiment 7 are described by way of example of the transition effect on the two images, it is also possible to offer the same advantage in the case where a piece of image is scrolled to be displayed from end to end as in the foregoing embodiment 1, one or more images are scrolled repeatedly, or three or more images are caused to make a transition continuously, by providing the image files by the number of the images in the foregoing embodiment 2, the foregoing embodiment 4 and the foregoing embodiment 5, by providing, in the foregoing embodiment 3, the image files and smoothing processing sections by the number of images, and by obtaining by the image generating sections 3a and 3b the drawing source regions and drawing target regions corresponding to the individual image data and output data in accordance with the transition effect and by smoothing them.

In addition, in the foregoing embodiment 1 to the foregoing embodiment 7, it is obvious that the same advantages can be gained by realizing the individual processing sections by a program.

## Claims

1. An image compositing apparatus comprising:

a transition information calculating section for calculating a number of pixels moved as transition information on an image; and
an image compositing section for generating, according to image data, generated data corresponding to a rounded down number of pixels moved which is obtained by rounding down the number of pixels moved calculated by said transition information calculating section to the nearest whole number, and generated data corresponding to a rounded up number of pixels moved which is obtained by rounding up the number of pixels moved to the nearest whole number, and for outputting composite image data by combining the generated data at a composite ratio obtained from the number of pixels moved.

2. The image compositing apparatus according to claim 1, wherein said image compositing section:

generates smoothing parameters based on the transition information, a desired type of transition effect and a moving direction;

executes smoothing processing of the image data in accordance with the smoothing parameters;
generates the generated data corresponding to the rounded down number of pixels moved and the rounded up number of pixels moved from the image data having undergone the smoothing processing; and
combines the generated data at the composite ratio.

3. The image compositing apparatus according to claim 1, wherein said image compositing section:

generates smoothing parameters based on the transition information, a desired type of transition effect and a moving direction;
generates the generated data corresponding to the rounded down number of pixels moved and the rounded up number of pixels moved from the image data;
executes smoothing processing of the generated data in accordance with the smoothing parameters; and
combines the generated data having undergone the smoothing processing at the composite ratio.

4. The image compositing apparatus according to claim 1, wherein said image compositing section:

generates smoothing parameters based on the transition information, a desired type of transition effect and a moving direction;
generates the generated data corresponding to the rounded down number of pixels moved and the rounded up number of pixels moved, which are generated from the image data;
combines the generated data at the composite ratio; and
executes smoothing processing of the combined generated data in accordance with the smoothing parameters.

5. The image compositing apparatus according to claim 1, wherein said image compositing section comprises:

a first image generating section for acquiring image data in a drawing source region portion concerning the image data set according to the rounded down number of pixels moved, and for setting the acquired image data as generated data in a drawing target region portion concerning first generated data to be generated;
a second image generating section for acquiring image data in a drawing source region portion concerning the image data set according to the rounded up number of pixels moved, and for setting the acquired image data as generated data in a drawing target region portion concerning second generated data to be generated; and
an image interpolating compositing section for generating interpolated composite data by combining at the composite ratio the first generated data said first image generating section generates with the second generated data said second image generating section generates, and wherein
said image compositing section outputs the interpolated composite data said image interpolating compositing section generates as the composite image data.

6. The image compositing apparatus according to claim 5, wherein said image compositing section comprises:

a parameter control section for generating smoothing parameters based on the transition information, a desired type of transition effect and a moving direction;
a first smoothing processing section for acquiring image data in a drawing source region portion concerning the image data set according to the rounded down number of pixels moved, and for generating first smoothed image data having undergone smoothing processing applied in accordance with the smoothing parameters said parameter control section generates; and
a second smoothing processing section for acquiring image data in a drawing source region portion concerning the image data set according to the rounded up number of pixels moved, and for generating second smoothed image data having undergone smoothing processing applied in accordance with the smoothing parameters said parameter control section generates, and wherein
said first image generating section and said second image generating section acquire the first smoothed data said first smoothing processing section generates and the second smoothed data said second smoothing processing section generates, and set the acquired smoothed data as generated data in drawing target region portions concerning the first generated data and the second generated data to be generated.

7. The image compositing apparatus according to claim 6, wherein said image compositing section comprises:

an output selecting section for selecting and outputting one of the image data and the interpolated composite data according to the transition information acquired from said image information calculating section, and

sets the output selected by said output selecting section as the composite image data.

8. The image compositing apparatus according to claim 5, wherein said image compositing section comprises:

a parameter control section for generating smoothing parameters based on the transition information, a desired type of transition effect and a moving direction;
a first smoothing processing section for acquiring first generated image data said first image generating section generates, and for generating first smoothed image data having undergone smoothing processing applied in accordance with the smoothing parameters said parameter control section generates; and
a second smoothing processing section for acquiring second generated image data said second image generating section generates, and for generating second smoothed image data having undergone smoothing processing applied in accordance with the smoothing parameters said parameter control section generates, and wherein said image interpolating compositing section generates the interpolated composite data from the first smoothed data said first smoothing processing section generates and the second smoothed data said second smoothing processing section generates.

9. The image compositing apparatus according to claim 8, wherein said image compositing section comprises:

an output selecting section for selecting and outputting one of the image data and the interpolated composite data according to the transition information acquired from said image information calculating section, and sets the output selected by said output selecting section as the composite image data.

10. The image compositing apparatus according to claim 5, wherein said image compositing section comprises:

a parameter control section for generating smoothing parameters based on the transition information, a desired type of transition effect and a moving direction; and
a smoothing processing section for acquiring the interpolated composite data said image interpolating compositing section generates, and for generating smoothed data by applying smoothing processing in accordance with the smoothing parameters said parameter control section generates, and wherein said smoothing processing section outputs the smoothed data it generates as smoothed interpolated composite data.

11. The image compositing apparatus according to claim 10, wherein said image compositing section comprises:

an output selecting section for selecting and outputting one of the image data and the interpolated composite data according to the transition information acquired from said image information calculating section, and sets the output selected by said output selecting section as the composite image data.

12. An image compositing method comprising:

a transition information calculating step of calculating a number of pixels moved as transition information on an image;
a first generating step of generating, according to image data, generated data corresponding to a rounded down number of pixels moved which is obtained by rounding down the number of pixels moved calculated at said transition information calculating step to the nearest whole number;
a second generating step of generating, according to the image data, generated data corresponding to a rounded up number of pixels moved which is obtained by rounding up the number of pixels moved calculated at said transition information calculating step to the nearest whole number; and
a step of outputting composite image data by combining the generated data produced at the first and second steps at a composite ratio obtained from the number of pixels moved.

# FIG. 1

# FIG. 2

Method (A)

Method (B)

Image Data 11

Image Data 11

Time

mv          mv

mv

Second Drawing
Source Region

Second Drawing Target
Region [generated Data 12a]

Drawing Target Region
[generated Data 12a]

First Drawing Target Region
[generated Data 12a]

Drawing Source Region

First Drawing Source Region

# FIG. 3

Transition Information Calculating Section 2 Calculates the Number of Pixels Moved mv — ST1

ST2

Image Generating Section 3a Calculates First Drawing Source Region and First Drawing Target Region, Receives As its Input First Drawing Source Region Portion of Image Data 11 In Image File 1, and Outputs As First Drawing Target Region Portion of Generated Data 12a

ST4

Image Generating Section 3b Calculates First Drawing Source Region and First Drawing Target Region, Receives As its Input First Drawing Source Region Portion of Image Data 11 In Image File 1, and Outputs As First Drawing Target Region Portion of Generated Data 12b

ST3

Image Generating Section 3a Calculates Second Drawing Source Region and Second Drawing Target Region, Receives As its Input Second Drawing Source Region Portion of Image Data 11 In Image File 1, and Outputs As Second Drawing Target Region Portion of Generated Data 12a

ST5

Image Generating Section 3b Calculates Second Drawing Source Region and Second Drawing Target Region, Receives As its Input Second Drawing Source Region Portion of Image Data 11 In Image File 1, and Outputs As Second Drawing Target Region Portion of Generated Data 12b

Applied to Only Method (a)

Image Interpolating Compositing Section 4 Calculates Composite Ratio f, and Outputs Interpolated Composite Data 13 Obtained By Interpolating (blending) Input Generated Data 12a and 12b According to Composite Ratio f As Composite Data 31 — ST6

Output Control Section 5 Displays Composite Data 31 On Display Apparatus — ST7

34

# FIG. 4

```
        1a                          1b
   ┌──────────────────┐      ┌──────────────────┐
   │   Image File     │      │   Image File     │
   │  ┌────────────┐  │      │  ┌────────────┐  │
   │  │ Image Data │~11a│    │  │ Image Data │~11b│
   │  └────────────┘  │      │  └────────────┘  │
   └──────────────────┘      └──────────────────┘
```

30

**Image Compositing Section**

```
     3a                              3b
   ┌──────────────────┐      ┌──────────────────┐
   │ Image Generating │      │ Image Generating │
   │     Section      │      │     Section      │
   │  ┌──────────┐    │      │  ┌──────────┐    │
   │  │Generated │~12a│      │  │Generated │~12b│
   │  │  Data    │    │      │  │  Data    │    │
   │  └──────────┘    │      │  └──────────┘    │
   └──────────────────┘      └──────────────────┘
```

**Image Interpolating Compositing Section** ~4

Interpolated Composite Data ~13

~31

output control section ~5

Transition Information Calculating Section ~2

# FIG. 5

Image Data 11a

Image Data 11b

Generated Data 12a

Time

mv

mv

mv

Drawing Source
Region a

Drawing Source
Region b

Drawing Target
Region a

Drawing Target
Region b

# FIG. 6

Image Data 11a

Generated Data 12a

Image Data 11b

Drawing Source
Region a
mv_a

Drawing Target
Region a
mv_a

mv_a

Time

Drawing
Target Region b

Drawing
Source Region b

# FIG. 7

Transition Information Calculating Section 2 Calculates The Number Of Pixels Moved mv — ST11

ST12

Image Generating Section 3a Calculates Drawing Source Region and Drawing Target Region, Receives As its Input Drawing Source Region Portion of Image Data 11a In Image File 1a, and Outputs As Drawing Target Region Portion of Generated Data 12a ( ←mv_a)

ST14

Image Generating Section 3b Calculates Drawing Source Region And Drawing Target Region, Receives As its Input Drawing Source Region Portion of Image Data 11a In Image File 1a, and Outputs As Drawing Target Region Portion of Generated Data 12b ( ←mv_b)

ST13

Image Generating Section 3a Calculates Drawing Source Region and Drawing Target Region, Receives As its Input Drawing Source Region Portionof Image Data 11b In   Image File 1b, and Outputs As Drawing Target Region Portion of Generated Data 12a ( ←mv_a)

ST15

Image Generating Section 3b Calculates Drawing Source Region and Drawing Target Region, Receives As its Input Drawing Source Region Portion of Image Data 11b In Image File 1b, and Outputs As Drawing Target Region Portion of Generated Data 12b ( ←mv_b)

Image Interpolating Compositing Section 4 Calculates Composite Ratio f, and Outputs Interpolated Composite Data 13 Obtained By Interpolating (blending) Input Generated Data 12a and 12b According to Composite Ratio f As Composite Data 31 — ST16

Output Control Section 5 Displays Composite Data 31 On Display Apparatus. — ST17

# FIG. 8

| Input | Drawing Source Region | | Drawing Target Region | | Output |
|---|---|---|---|---|---|
| Image Data 11a | a | (mv_a,0) - (320,48)<br>(7,0) - (320,48) | (0,0) - (320-mv_a,48)<br>(0,0) - (313,48) | a | Generated Data 12a |
| Image Data 11b | b | (0,0) - (mv_a,48)<br>(0,0) - (7,48) | (320-mv_a,0) - (320,48)<br>(313,0) - (320,48) | b | |
| Image Data 11a | a | (mv_b,0) - (320,48)<br>(8,0) - (320,48) | (0,0) - (320-mv_b,48)<br>(0,0) - (312,48) | a | Generated Data 12b |
| Image Data 11b | b | (0,0) - (mv_b,48)<br>(0,0) - (8,48) | (320-mv_b,0) - (320,48)<br>(312,0) - (320,48) | b | |

※ Lower Column of Each Region Indicates Region When mv_a = 7 or mv_b = 8

# FIG. 9

|  | x-2 | x-1 | x | x+1 | x+2 | x+3 | x+4 | x+5 | x+6 |
|---|---|---|---|---|---|---|---|---|---|
| (a) Image Data 11a (mv = 0) | 0 | 0 | 3 | 2 | 10 | 2 | 3 | 0 | 0 |

|  | x-9 | x-8 | x-7 | x-6 | x-5 | x-4 | x-3 | x-2 | x-1 |
|---|---|---|---|---|---|---|---|---|---|
| (b) Generated Data 12a (mv = 7) | 0 | 0 | 3 | 2 | 10 | 2 | 3 | 0 | 0 |
| (c) Generated Data 12b (mv = 8) | 0 | 3 | 2 | 10 | 2 | 3 | 0 | 0 | 0 |

|  | x-8.466 ⋯ | x-7.466 ⋯ | x-6.466 ⋯ | x-5.466 ⋯ | x-4.466 ⋯ | x-3.466 ⋯ | x-2.466 ⋯ | x-1.466 ⋯ | x-0.466 ⋯ |
|---|---|---|---|---|---|---|---|---|---|
| (d) Interpolated Composite Data 13 (mv = 7.466 ⋯) | 0 | 3 | 2 | 10 | 2 | 3 | 0 | 0 | 0 |

|  | x-9 | x-8 | x-7 | x-6 | x-5 | x-4 | x-3 | x-2 | x-1 |
|---|---|---|---|---|---|---|---|---|---|
|  | 0 | 1.401 | 2.533 | 5.736 | 6.264 | 2.467 | 1.599 | 0 | 0 |

EP 2 012 301 A1

# FIG. 10

(a) Image Data 11a

(b) Generated Data 12a

(c) Generated Data 12b

$$I'(x,y)=(1-f) \cdot Ia(x,y)+f \cdot Ib(x,y)$$

(d) Interpolated Composite Data 13 (mv = 7.466 ···)

# FIG. 11

# FIG. 12

1a

**Image File**

| Image Data |~11a

1b

**Image File**

| Image Data |~11b

30

**Image Compositing Section**

Smoothing Processing Section ~7a

| Smoothed Data |~14a

Smoothing Processing Section ~7b

14b~| Smoothed Data |

3a

**Image Generating Section**

| Generated Data |~12a

3b

**Image Generating Section**

| Generated Data |~12b

18

**Parameter Control Section**

Image Interpolating Compositing Section ~4

| Interpolated Composite Data |~13

8 ~| Output Selecting Section |

31~

5 ~| Output Control Section |

2

**Transition Information Calculating Section**

6

**Drawing Timing Information Storage Section**

10

**Transition Effect Storage Section**

# FIG. 13

Drawing Timing Information Storage Section 6 Updates Drawing Timing Information — ST21

Transition Information Calculating Section 2 Calculates the Number of Pixels Moved mv — ST22

Parameter Control Section 18 Generates Smoothing Parameters According to Type of Transition Effect — ST23

ST24

Smoothing Processing Section 7a Receives Image Data 11a In Image File 1a As Input, and Outputs Smoothed Data 14a Having Been Smoothed

ST25

Smoothing Processing Section 7b Receives Image Data 11b In Image File 1b As Input, and Outputs Smoothed Data 14b Having Been Smoothed

ST26

Image Generating Section 3a Calculates Drawing Source Region and Drawing Target Region, Receives As Its Input Drawing Source Region Portion of Smoothed Data 14a, and Outputs As Drawing Target Region Portion of Generated Data 12a ($\leftarrow$ mv_a)

ST28

Image Generating Section 3b Calculates Drawing Source Region and Drawing Target Region, Receives As its Input Drawing Source Region Portion of Smoothed Data 14b, and Outputs As Drawing Target Region Portion of Generated Data 12b ($\leftarrow$ mv_b)

ST27

Image Generating Section 3a Calculates Drawing Source Region and Drawing Target Region, Receives As its Input Drawing Source Region Portion of Smoothed Data 14b, and Outputs As Drawing Target Region Portion of Generated Data 12a ($\leftarrow$ mv_a)

ST29

Image Generating Section 3bCalculates Drawing Source Region and Drawing Target Region, Receives As its Input Drawing Source Region Portion of Smoothed Data 14a, and Outputs As Drawing Target Region Portion of Generated Data 12b ($\leftarrow$ mv_b)

Image Interpolating Compositing Section 4 Calculates Composite Ratio f, and Outputs Interpolated Composite Data 13 Obtained By Interpolating (blending) Input Generated Data 12a and 12b According to Composite Ratio f As Composite Data 31 — ST30

Output Selecting Section 8 Selects One of Image Data 11a, 11b and Interpolated Composite Data 13 In Accordance With Transition Information, and Outputs As Composite Data 31 — ST31

Output Control Section 5 Displays Composite Data 31 On Display Apparatus — ST32

# FIG. 14

(a) image data 11a (mv = 0)

| x-2 | x-1 | x | x+1 | x+2 | x+3 | x+4 | x+5 | x+6 |
|---|---|---|---|---|---|---|---|---|
| 0 | 0 | 3 | 2 | 10 | 2 | 3 | 0 | 0 |

(b) smoothed data 14a (mv = 0)

| x-2 | x-1 | x | x+1 | x+2 | x+3 | x+4 | x+5 | x+6 |
|---|---|---|---|---|---|---|---|---|
| 0 | 0.75 | 2 | 4.25 | 6 | 4.25 | 2 | 0.75 | 0 |

(c) generated data 12a (mv = 7)

| x-9 | x-8 | x-7 | x-6 | x-5 | x-4 | x-3 | x-2 | x-1 |
|---|---|---|---|---|---|---|---|---|
| 0 | 0.75 | 2 | 4.25 | 6 | 4.25 | 2 | 0.75 | 0 |

(d) generated data 12b (mv = 8)

| x-9 | x-8 | x-7 | x-6 | x-5 | x-4 | x-3 | x-2 | x-1 |
|---|---|---|---|---|---|---|---|---|
| 0.75 | 2 | 4.25 | 6 | 4.25 | 2 | 0.75 | 0 | 0 |

(e) interpolated composite data 13 (mv = 7.466 ⋯)

| x-8.466 ⋯ | x-7.466 ⋯ | x-6.466 ⋯ | x-5.466 ⋯ | x-4.466 ⋯ | x-3.466 ⋯ | x-2.466 ⋯ | x-1.466 ⋯ | x-0.466 ⋯ |
|---|---|---|---|---|---|---|---|---|
| 0.75 | 2 | 4.25 | 6 | 4.25 | 2 | 0.75 | 0 | 0 |

| x-9 | x-8 | x-7 | x-6 | x-5 | x-4 | x-3 | x-2 | x-1 |
|---|---|---|---|---|---|---|---|---|
| 0.350 | 1.334 | 3.051 | 5.067 | 5.183 | 3.199 | 1.416 | 0.400 | 0 |

EP 2 012 301 A1

# FIG. 15

(a) Image Data 11a, (b) Smoothed Data 14a

(c) Generated Data 12a

(d) Generated Data 12b

$$I'(x,y)=(1-f) \cdot Ia(x,y)+f \cdot Ib(x,y)$$

(e) Interpolated Composite Data 13 (mv = 7.466···)

# FIG. 16

# FIG. 17

Drawing Timing Information Storage Section 6 Updates Drawing Timing Information — ST41

Transition Information Calculating Section 2 Calculates the Number of Pixels Moved mv — ST42

Parameter Control Section 18 Generates Smoothing Parameters According to Type of Transition Effect — ST43

ST44

Image Generating Section 3a Calculates Drawing Source Region and Drawing Target Region, Receives As its Input Drawing Source Region Portion of Image Data 11a in Image File 1a, and Outputs As Drawing Target Region Portion of Generated Data 12a(← mv_a)

ST47

Image Generating Section 3b Calculates Drawing Source Region and Drawing Target Region, Receives As its Input Drawing Source Region Portion of Image Data 11a In Image File 1a, and Outputs As Drawing Target Region Portion of Generated Data 12b (← mv_b)

ST45

Image Generating Section 3a Calculates Drawing Source Region and Drawing Target Region, Receives As its Input Drawing Source Region Portion of Image Data 11b In Image File 1b, and Outputs As Drawing Target Region Portion of Generated Data 12a (← mv_a)

ST48

Image Generating Section 3b Calculates Drawing Source Region and Drawing Target Region, Receives As its Input Drawing Source Region Portion of Image Data 11b In Image File 1b, and Outputs As Drawing Target Region Portion of Generated Data 12b (← mv_b)

ST46

Smoothing Processing Section 7a Receives Generated Data 12a As Input, And Outputs Smoothed Data 14a Having Been Smoothed

ST49

Smoothing Processing Section 7b Receives Generated Data 12b As Input, and Outputs Smoothed Data 14b Having Been Smoothed

Image Interpolating Compositing Section 4 Calculates Composite Ratio f, and Outputs Interpolated Composite Data 13 Obtained By Interpolating (blending) Input Smoothed Data 14a And 14b According to Composite Ratio f As Composite Data 31 — ST50

Output Control Section 5 Displays Composite Data 31 On Display Apparatus — ST51

# FIG. 18

# FIG. 19

Drawing Timing Information Storage Section 6
Updates Drawing Timing Information — ST61

Transition Information Calculating Section 2
Calculates the Number of Pixels Moved mv — ST62

ST63

Image Generating Section 3a Calculates
Drawing Source Region and Drawing
Target Region, Receives As its Input
Drawing Source Region Portion of
Image Data 11a In Image File 1a, and
Outputs As Drawing Target Region
Portion of Generated Data 12a (← mv_a)

ST65

Image Generating Section 3b Calculates
Drawing Source Region and Drawing
Target Region, Receives As its Input
Drawing Source Region Portion of
Image Data 11a In Image File 1a,
and Outputs As Drawing Target Region
Portion of Generated Data 12b (← mv_b)

ST64

Image Generating Section 3a Calculates
Drawing Source Region and Drawing
Target Region, Receives As its Input
Drawing Source Region Portion if
Image Data 11b In Image File 1b, and
Outputs As Drawing Target Region
Portion of Generated Data 12a (← mv_a)

ST66

Image Generating Section 3b Calculates
Drawing Source Region and Drawing
Target Region, Receives As its Input
Drawing Source Region Portion of
Image Data 11b In Image File 1b, and
Outputs As Drawing Target Region
Portion of Generated Data 12b (← mv_b)

Image Interpolating Compositing Section 4 Calculates Composite Ratio f,
and Outputs Interpolated Composite Data 13 Obtained By Interpolating
(blending) Input Generated Data 12a and 12b According to Composite
Ratio f As Composite Data 31 — ST67

Parameter Control Section 18 Generates Smoothing
Parameters According to Type of Transition Effect — ST68

Smoothing Processing Section 7 Outputs Smoothed Data 14 Obtained By
Smoothing Interpolated Composite Data 13 As Composite Data 31 — ST69

Output Control Section 5 Displays Composite Data 31 On Display Apparatus — ST50

# FIG. 20

Image File ~1a
Image Data ~11a

Image File ~1b
Image Data ~11b

151oo    151pq    151(M-1)(N-1)    151

Smoothing-Application Image Generating Section
Smoothing-Application Image Generating Section
. . .
Smoothing-Application Image Generating Section

161oo    161pq    161(M-1)(N-1)

Smoothing-application Image Data
Smoothing-application Image Data
Smoothing-application Image Data

Smoothing Compositing Section    ~17a
Smoothing Composite Data    ~19a

Smoothing Processing Section    7a

152oo    152pq    152(M-1)(N-1)    152

Smoothing-Application Image Generating Section
Smoothing-Application Image Generating Section
. . .
Smoothing-Application Image Generating Section

162oo    162pq    162(M-1)(N-1)

Smoothing-application Image Data
Smoothing-application Image Data
Smoothing-application Image Data

Smoothing Compositing Section    ~17b
Smoothing Composite Data    ~19b

Smoothing Processing Section    7b

Image Generating Section    ~3a
Generated Data    ~12a

18
Parameter Control Section

Image Generating Section    ~3b
Generated Data    ~12b

EP 2 012 301 A1

# FIG. 21

Drawing Timing Information Storage Section 6 Updates Drawing Timing Information ⟩ST81

Transition Information Calculating Section 2 Calculates the Number of Pixels Moved mv ⟩ST82

Parameter Control Section 18 Generates Smoothing Parameters According to Type of Transition Effect ⟩ST83

Smoothing Application Image Generating Section 151pq Calculates Drawing Source Region and Drawing Target Region, Receives As Its Input Drawing Source Region Portion of Image Data 11a In Image File 1a, and Outputs As Drawing Target Region Portion of Smoothing-Application Image Data 161pq ⟩ST84

Smoothing Application Image Generating Section 152pq Calculates Drawing Source Region and Drawing Target Region, Receives As its Input Drawing Source Region Portion of Image Data 11b In Image File 1b, and Outputs As Drawing TargetRegion Portion of Smoothing-Application Image Data 162pq ⟩ST85

ST86

Smoothing Compositing Section 17a Calculates Composite Ratio f, Receives As its Input All Image Data of Smoothing-application Image Data 161pq, and Outputs Smoothing Composite Data 19a Obtained By Interpolating (blending) Input Data According to Composite Ratios

ST87

Smoothing Compositing Section 17b Calculates Composite Ratio f, Receives As its Input All Image Data of Smoothing-Application Image Data 162pq, and Outputs Smoothing Composite Data 19b Obtained By Interpolating (blending) Input Data According to Composite Ratio

ST88

Image Generating Section 3a Calculates Drawing Source Region and Drawing Target Region, Receives As its Input Drawing Source Region Portion of Smoothing Composite Data 19a, and Outputs As Drawing Target Region Portion of Generated Data 12a (← mv_a).

ST90

Image Generating Section 3b Calculates Drawing Source Region and Drawing Target Region, Receives As its Input Drawing Source Region Portion of Smoothing Composite Data 19b, and Outputs As Drawing Target Region Portion of Generated Data 12b (← mv_b)

ST89

Image Generating Section 3a Calculates Drawing Source Region and Drawing Target Region, Receives As its Input Drawing Source Region Portion of Smoothing Composite Data 19b, and Outputs As Drawing Target Region Portion of Generated Data 12a (← mv_a)

ST91

Image Generating Section 3b Calculates Drawing Source Region and Drawing Target Region, Receives As its Input Drawing Source Region Portion of Smoothing Composite Data 19a, and Outputs As Drawing Target Region Portion of Generated Data 12b (← mv_b)

Image Interpolating Compositing Section 4 Calculates Composite Ratio f, and Outputs Interpolated Composite Data 13 Obtained By Interpolating (blending) Input Generated Data 12a and 12b According to Composite Ratio. ⟩ST92

Output Selecting Section 8 Selects One of Image File 1 and Interpolated Composite Data 13 In Accordance With Transition Information, and Outputs As Composite Data 31 ⟩ST93

Output Control Section 5 Displays Composite Data 31 On Display Apparatus ⟩ST94

# FIG. 22

# FIG. 23

Drawing Timing Information Storage Section 6 Updates Drawing Timing Information — ST101

Transition Information Calculating Section 2 Calculates The Number of Pixels Moved mv — ST102

Parameter Control Section 18 Generates Smoothing Parameters According to Type of Transition Effect — ST103

· · ·     · · ·

ST104

· · · Image Generating Section 3pq Calculates Drawing Source Region and Drawing Target Region, Receives As Its Input Drawing Source Region Portion of Image Data 11a In Image File 1a, and Outputs As Drawing Target Region Portion of Generated Data 12pq · · ·

ST105

· · · Image Generating Section 3pq Calculates Drawing Source Region and Drawing Target Region, Receives As its Input Drawing Source Region Portion of Image Data 11b In Image File 1b, and Outputs As Drawing Target Region Portion of Generated Data 12pq · · ·

· · ·     · · ·

Image Interpolating Compositing Section 4 Calculates Composite Ratio f, Receives All Generated Data 12pq As its Input, and Outputs Interpolated Composite Data 13 Obtained By Interpolating (blending) Input Generated Data According to Composite Ratios As Composite Data 31 — ST106

Output Control Section 5 Displays Composite Data 31On Display Apparatus — ST107

# FIG. 24

Image Data 11a

Generated Data 12a

Image Data 11b

Drawing Source
Region a
mv_a

Drawing Target
Region a
mv_a

mv_a

Time

Drawing
Target Region b

Drawing
Source Region b

# FIG. 25

Image Data 11a

Generated Data 12a

Image Data 11b

Drawing Source Region a

mv_a

Drawing Target Region a

mv_a

mv_a

Time

Drawing Target Region b

Drawing Source Region b

# FIG. 26

Image Data 11a

Generated Data 12a

Image Data 11b

Drawing Source
Region a
mv_a

Drawing Target
Region a
mv_a

mv_a

Time

Drawing
Source Region b

Drawing
Target Region b

# FIG. 27

Image Data 11a

Generated Data 12a

Image Data 11b

Drawing Source Region a1

Drawing Source Region a2

mv_a

Drawing Target Region a1

Drawing Target Region a2

mv_a

mv_a

Time

Drawing Target Region b

Drawing Source Region b

# FIG. 28

Image Data 11a

Generated Data 12a

Image Data 11b

Drawing Source
Region a

mv_a/2   mv_a/2

Drawing Target
Region a

Time

Drawing
Source
Region b1

Drawing
Source
Region b2

Drawing
Target
Region b1

Drawing
Target
Region b2

## INTERNATIONAL SEARCH REPORT

| | International application No. |
|---|---|
| | PCT/JP2006/308653 |

A. CLASSIFICATION OF SUBJECT MATTER
*G09G5/34*(2006.01), *G06T3/00*(2006.01), *G09G5/00*(2006.01), *G09G5/377*
(2006.01), *H04N5/265*(2006.01)

According to International Patent Classification (IPC) or to both national classification and IPC

B. FIELDS SEARCHED

Minimum documentation searched (classification system followed by classification symbols)
G09G5/00-5/42, G06F3/14-3/153

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 8-129374 A (Matsushita Electric Industrial Co., Ltd.), 21 May, 1996 (21.05.96), Par. Nos. [0008], [0020] to [0030]; Figs. 1 to 6 (Family: none) | 1,5,12<br>2-4,6-11 |
| X<br>A | JP 4-116691 A (Videotron Corp.), 17 April, 1992 (17.04.92), Page 3, upper left column, line 8 to page 4, upper right column, line 20 (Family: none) | 1,5,12<br>2-4,6-11 |
| A | JP 7-23290 A (Nippon Hoso Kyokai), 24 January, 1995 (24.01.95), Par. Nos. [0010] to [0022]; Figs. 1 to 4 (Family: none) | 1-12 |

☒ Further documents are listed in the continuation of Box C.　　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 May, 2006 (30.05.06) | 20 June, 2006 (20.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/308653 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 4-301685 A  (N.V. Philips' Gloeilampenfabrieken), 26 October, 1992 (26.10.92), Par. Nos. [0015] to [0017]; Fig. 2 & GB 9024712 A          & EP 486090 A2 | 1-12 |
| A | US 5477240 A  (S. J. Huebner), 19 December, 1995 (19.12.95), Column 4, lines 17 to 50; Figs. 3A to 3E (Family: none) | 1-12 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53136451993 B